(19) Europäisches Patentamt
European Patent Office
Office européen des brevets

(11) EP 3 641 564 B1

(12) EUROPÄISCHE PATENTSCHRIFT

(45) Veröffentlichungstag und Bekanntmachung des Hinweises auf die Patenterteilung:
**22.05.2024 Patentblatt 2024/21**

(21) Anmeldenummer: **17737731.4**

(22) Anmeldetag: **22.06.2017**

(51) Internationale Patentklassifikation (IPC):
*A23L 27/00* (2016.01) *A23L 27/20* (2016.01)

(52) Gemeinsame Patentklassifikation (CPC):
**A23L 27/84; A23L 27/204; A23L 27/86**

(86) Internationale Anmeldenummer:
**PCT/EP2017/065457**

(87) Internationale Veröffentlichungsnummer:
**WO 2018/233841 (27.12.2018 Gazette 2018/52)**

# (54) GESCHMACKSMODULIERENDE AROMASTOFFE

TASTE MODULATING FLAVORING SUBSTANCES

AGENTS AROMATIQUES MODULANT LA SAVEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.04.2020 Patentblatt 2020/18**

(73) Patentinhaber: **Symrise AG**
**37603 Holzminden (DE)**

(72) Erfinder:
- **LEY, Jakob Peter**
  **37603 Holzminden (DE)**
- **BLINGS, Maria**
  **37603 Holzminden (DE)**
- **REICHELT, Katharina, Dr.**
  **37603 Holzminden (DE)**
- **PAETZ, Susanne**
  **37671 Höxter (DE)**
- **SOMERS, Tom**
  **37603 Holzminden (DE)**
- **WITTLAKE, Rüdiger**
  **37620 Bremke (DE)**
- **STÜRTZ, Melanie, Dr.**
  **37671 Höxter (DE)**
- **LAMOTTKE, Kai, Dr.**
  **82152 Planegg/Martinsried (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 1 972 203** **EP-A1- 2 298 084**
**EP-A1- 2 801 357** **WO-A2-02/13806**

- **YAGI A ET AL: "STUDIES ON HYDRANGEA SPECIES. 1. PHENOLIC COMPONENTS OF HYDRANGEA SERRATA VAR THUNBERGII SUGIMOTO", CHEMICAL AND PHARMACEUTICAL BULLETIN (TOKYO), Bd. 20, Nr. 8, 1972, Seiten 1755-1761, XP002772885, ISSN: 0009-2363, DOI: 10.1248/cpb.20.1755**
- **SUZUKI H ET AL: "ISOLATION AND IDENTIFICATION OF TWO NOVEL GLYCOSIDES FROM THE FRESH LEAVES OF AMACHA (HYDRANGEA MACROPHYLLA VAR THUNBERGII MAKINO)", AGRICULTURAL AND BIOLOGICAL CHEMISTRY, Bd. 43, Nr. 8, 1979, Seiten 1785-1787, XP002772886, ISSN: 0002-1369, DOI: 10.1080/00021369.1979.10863708**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

**Beschreibung**

Die vorliegende Erfindung betrifft bestimmte Stilbencarbonsäurederivate mit geschmacksmodulierenden, insbesondere geschmacksmaskierenden Eigenschaften. Insbesondere betrifft die vorliegende Erfindung Mischungen umfassend Verbindungen der Formel (I) und mindestens eine Substanz, die einen bitteren Geschmackseindruck hervorruft. Weiterhin betrifft die vorliegende Erfindung oral anwendbare Produkte enthaltend eine erfindungsgemäße Mischung, sowie Verfahren zur Herstellung der erfindungsgemäßen Mischungen und Produkte. Ferner betrifft die vorliegenden Erfindung auch die Verwendung einer Verbindung der Formel (I) oder einer Mischung aus zwei oder mehr Verbindungen der Formel (I) zum Maskieren oder Vermindern eines bitteren Geschmackseindrucks, sowie bestimmte neue Verbindungen der Formel (I).

Nahrungs- und Genussmittel enthalten häufig eine Vielzahl verschiedener Bitterstoffe, die zwar einerseits in bestimmten Lebensmitteln in Maßen erwünscht sind und zu deren charakteristischem Geschmack beitragen (z.B. Coffein in Tee oder Kaffee, Chinin in so genannten Bitter-Lemon-Getränken, Bitterstoffe aus Hopfen in Bier), andererseits den Wert aber auch stark mindern können. Dazu gehören z.B. Flavonoidglycoside und Limonoide in Zitrus-Säften, der bittere Nachgeschmack vieler hochintensiver Süßstoffe wie Aspartam, Cyclamat, Acesulfam K, Rebaudiosid A, Rebaudiosid M, Mogrosid V, Glyccyrhizinsäure oder Saccharin, der bittere Geschmack von pharmazeutisch aktiven Wirkstoffen wie z.B. Paracetamol, Chinin, Omeprazol, Ibuprofen, Dextromorphan, Guafenesin, sowie der unangenehme Geschmack, den hydrophobe Aminosäuren und Peptide in Käse verursachen können. Bittergeschmack wird regelmäßig durch einzelne Stoffe verursacht, die an spezielle Bitterrezeptoren auf Geschmackszellen, die in den so genannten Geschmacksknospen auf der Zunge zu finden sind, binden und über neurochemische Kaskaden ein Signal an das Gehirn senden, das eine Abwehrreaktion und einen negativen Geschmackseindruck verursacht (vgl. Meyerhof, Reviews of Physiology, Biochemistry and Pharmacology 2005, 154, 37-72).

Zur Senkung des Gehalts an Bitterstoffen in Lebensmitteln, die entweder bereits im Ausgangsmaterial enthalten sind, wie z.B. in Zitrusfrüchten oder während des Herstellungsprozesses entstehen, wie Beispielsweise bei der Käseherstellung, ist daher oft eine nachträgliche Behandlung nötig. Dies kann zum einen extraktiv geschehen, wie bei der Entcoffeinierung von Tee bzw. Kaffee, oder enzymatisch, z.B. Behandlung von Orangensaft mit einer Glycosidase zur Zerstörung des bitteren Naringins oder Spaltung von Gallusestern der Catechine zu den freien Catechinen mit Esterasen oder Einsatz von speziellen Peptidasen bei der Reifung von Käse. Diese Behandlung ist belastend für das Produkt, erzeugt Abfallstoffe und bedingt z.B. auch Lösungsmittelreste und andere Rückstände (Enzyme) in den Produkten.

Daher ist es wünschenswert, Stoffe zu finden, die unangenehme Geschmackseindrücke, insbesondere bittere, adstringierende und/oder metallische Geschmackseindrücke wirkungsvoll verändern, vermindern oder gar unterdrücken können, ohne dabei die Qualität eines entsprechenden Lebensmittels bzw. einer entsprechenden zum Verzehr oder zur oralen Aufnahme geeigneten Zubereitung durch zusätzliche Prozessschritte zu beeinflussen.

Auch bei vielen pharmazeutischen Wirkstoffen ist die Unterdrückung des bitteren Geschmacks besonders wichtig. Dadurch kann die Bereitschaft der Patienten, insbesondere bei bitterempfindlichen Patienten wie Kindern, die pharmazeutische Zubereitung oral zu sich zu nehmen, deutlich erhöht werden. Viele pharmazeutische Wirkstoffe, beispielsweise Aspirin, Salicin, Paracetamol, Ambroxol, Omeprazol, Ibuprofen, Guafenesin, Dextromorphan, Antibiotika wie Oxafloxazin oder Chinin, sowie eine ganze Reihe weiterer pharmazeutisch aktiver Verbindungen, weisen einen ausgeprägten bitteren, adstringierenden und/oder metallischen Geschmack und/oder Nachgeschmack auf. Bittere Flavonoidglycoside, vor allem auch das Naringin, werden in Zubereitungen zur Senkung von Blutlipiden sowie als Antioxidantien verwendet.

Des Weiteren weisen auch verschiedene nicht-nutritive, hochintensive Süßstoffe oft geschmackliche Nachteile auf. So sind sie zwar durch ihre geringe Einsatzkonzentration gut geeignet, Süße in Nahrungsmittel zu bringen, zeigen jedoch oft geschmackliche Probleme durch im Vergleich zu Zucker unähnliche Zeit-Intensitätsprofile (z.B. Sucralose, Stevioside, Cyclamat), einen bitteren und/oder adstringierenden Nachgeschmack (z.B. Acesulfam K, Saccharin, Steviosid, Rebaudiosid A, Rebaudiosid C, Rebaudiosid D, Rebaudiosid M, Mogrosid V) und/oder ausgeprägte zusätzliche Aromaeindrücke (z.B. Glycyrrhizinsäureammoniumsalz). Insbesondere bei süßen, kalorienfreien oder nahezu kalorienfreien Lebensmittel, beispielsweise Getränken, die mit Hilfe solcher Süßstoffe hergestellt wurden, senkt dieser unangenehme Neben- und/oder Nachgeschmack häufig die sensorische Akzeptanz und sollte daher maskiert werden.

Es sind bereits Konzepte zur zumindest teilweisen Bitter-Reduktion bekannt (z.B. in Chemosensory Perception 2008, 1 (1): 58-77). Dazu gehören beispielsweise die Entfernung des Bitterstoffes aus dem Lebensmittel, wie beispielsweise bei der Entbitterung von Zitrussäften, die Verwendung von Verkapselungssystemen oder das Überdecken von bitter schmeckenden Verbindungen mit Hilfe anderer Geschmacks- oder Aromastoffe, wie z.B. mit Süßstoffen (vgl. Recent Patents on Drug Delivery and Formulation, 2009, 3, 26-39). Aus EP1972203A1 ist die Maskierung oder Verminderung bitterer Geschmackseindrücke mit Hilfe von 4-Hydroxychalkonderivaten bekannt. Die beschriebenen Lösungsansätze zeigen aber alle in der Anwendung regelmäßig und zum Teil erhebliche Limitationen, wie teure Rohstoffe, unerwünschte Nebeneffekte (z.B. gleichzeitige Unterdrückung der Süße, gleichzeitig auftretender salziger Geschmack etc.) und/oder Löslichkeitsprobleme, so dass weiterhin Bedarf an natürlichen, einfach zu verwendenden bzw. einfach

in oral konsumierbare Zubereitungen einarbeitbaren maskierenden Substanzen, insbesondere zur Bittermaskierung, besteht.

Die Aufgabe der vorliegenden Erfindung bestand somit darin, Substanzen (Einzelstoffe oder Stoffgemische) zu finden, die eine Veränderung oder Maskierung, d.h. Verminderung oder Unterdrückung, eines bitteren Geschmackseindrucks unangenehm schmeckender Stoffe in zum Verzehr geeigneten Zubereitungen, insbesondere in Nahrung und Genussmitteln oder pharmazeutischen Zubereitungen, ermöglichen. Dabei war es insbesondere eine Aufgabe der vorliegenden Erfindung solche Substanzen bereitzustellen, die einen maskierenden Effekt gegen Bitterstoffe aufweisen. Vorzugsweise sollten die gesuchten Substanzen den sonstigen, erwünschten Geschmackseindruck einer zum Verzehr geeigneten Zubereitung nicht oder nicht wesentlich beeinflussen. Bevorzugt sollten die gesuchten Substanzen in einer breiten Produktpalette anwendbar und aus erneuerbaren bzw. nicht-fossilen Rohstoffen, z.B. aus natürlichen Quellen isolierbaren Ausgangsstoffen leicht zugänglich sein. Die oben identifizierten Aufgaben werden gelöst durch eine Mischung wie in Anspruch 1 definiert.

Überraschenderweise wurde gefunden, dass die Stilbencarbonsäurederivate der Formel (I) bittere Geschmackseindrücke einer Vielzahl von unangenehm schmeckenden Stoffen in oral konsumierbaren Zubereitungen maskieren, d.h. verringern oder sogar vollständig unterdrücken, können.

Unter Maskieren oder Maskierung wird im Rahmen des vorliegenden Textes eine Reduzierung, d.h. eine Verminderung bzw. eine vollständige Unterdrückung eines oder mehrerer Geschmackseindrücke verstanden. Das Verändern oder Maskieren des unangenehmen Geschmackseindrucks bedeutet damit im Ergebnis eine Geschmacksverbesserung, in Bezug auf bittere Geschmackseindrücke.

Die vorliegende Erfindung ermöglicht es durch den Einsatz der besagten Stilbencarbonsäurederivate insbesondere den bitteren Geschmackseindruck von Methylxanthinen wie z.B. Coffein, Theobromin, Alkaloiden, wie z.B. Chinin, Flavonoiden wie z.B. Naringin, Poncirin, (Gallo-)Catechinen und deren Gallaten, (Gallo-)-Epicatechinen und deren Gallaten, Phenolen wie z.B. Arbutin, Salicin, bitter nachschmeckenden Süßstoffen wie z.B. Acesulfam K, Saccharin, Steviosid, Rebaudiosid A, Rebaudiosid C, Rebaudiosid D, Rebaudiosid M, Mogrosid V, bitter schmeckenden Pharmawirkstoffen wie z.B. Naproxen, Diphenylhydramin, Famotidin, Aspirin, Salicin, Paracetamol (Acetaminophen, APAB), Ephidrin, Pseudoephidrin, Loratidin, Cetirizin, Doxylamin, Loperamid, Budenosid, Ambroxol, Omeprazol, Esomeprazol, Brompheniramin, Avobenzon, Sildenafil, Ibuprofen, Guafenesin, Dextromorphan, Antibiotika wie Oxafloxazin oder Chinin und deren jeweiligen physiologisch verträglichen Salze, oder auch anorganischen Salzen wie Kaliumchlorid, Calciumcarbonat, Magnesiumhydroxid, Magnesiumcarbonat oder Magnesiumsulfat zu maskieren, wobei es besonders vorteilhaft ist, dass die erfindungsgemäß zu verwendenden Verbindungen, deren Gemische und/oder deren Salze in den bevorzugt verwendeten geringen Konzentrationen nahezu keinen Eigengeschmack besitzen.

Der erfindungsgemäße Maskierungseffekt wird erreicht, wenn das Verhältnis der Gesamtmenge der Verbindung(en) der Formel (I) zur Gesamtmenge der Substanz(en) des Bestandteils ii) nicht zu niedrig ist. Dabei werden aber vorteilhafterweise nur relativ geringe Mengen der Verbindung(en) der Formel (I) benötigt.

Bevorzugt ist eine Mischung wie oben beschrieben, wobei das Verhältnis der Gesamtmenge der Verbindung(en) der Formel (I) zu der Gesamtmenge der Substanz(en) des Bestandteils ii) zwischen 1:1 bis 1:500 liegt, bevorzugt zwischen 1:2 bis 1:250. besonders bevorzugt zwischen 1:5 bis 1:100.

Erfindungsgemäße Mischungen und Produkte enthaltend die Stilbencarbonsäurederivate der Formel (Ia)

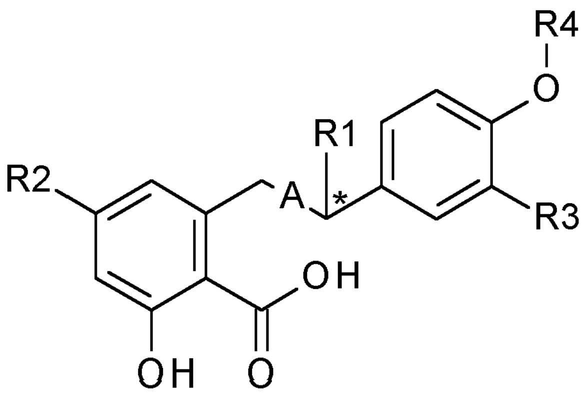

(Ia)

wobei A eine Einfachbindung und R1 eine Hydroxylgruppe darstellt, und

R2 ein Wasserstoffatom oder eine Hydroxylgruppe darstellt, und
R3 ein Wasserstoffatom, eine Hydroxylgruppe oder eine Methoxygruppe darstellt, und

R4 ein Wasserstoffatom oder eine Methylgruppe darstellt,
mit der Maßgabe, dass entweder R4 ein Wasserstoffatom und R3 wie oben definiert ein Wasserstoffatom, eine Hydroxylgruppe oder eine Methoxygruppe darstellt oder R4 eine Methylgruppe und R3 eine Hydroxylgruppe darstellt und deren physiologisch verträgliche Salze sind besonders bevorzugt.

Die Konfiguration an dem chiralen Kohlenstoffatom der Verbindungen der Formel

(Ia) 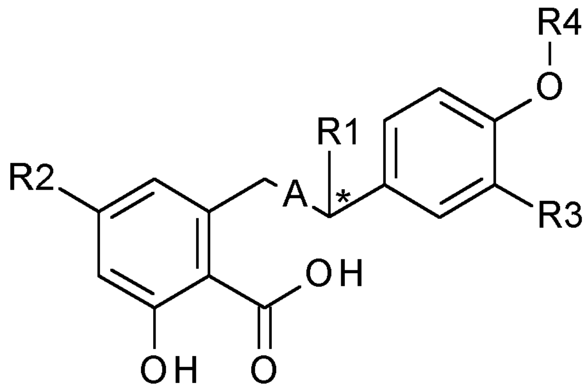 **(Ia)**

wobei
A eine Einfachbindung und R1 eine Hydroxylgruppe darstellt, d.h. an der mit einem "*" markierten Position im obigen Formelbild (I), kann (R) oder (S) sein. Dies gilt auch für die nachfolgenden Ausführungen und nachfolgend dargestellten Strukturformeln der erfindungsgemäß einzusetzenden Verbindungen. Die Verbindungen der Formel (I) können dabei in bevorzugten Ausgestaltungen als reine Enantiomere oder als Mischungen von Enantiomeren in jedem beliebigen Verhältnis zueinander miteinander kombiniert werden.

Die Konfiguration an der Doppelbindung "A" der Verbindungen der Formel (Ib)

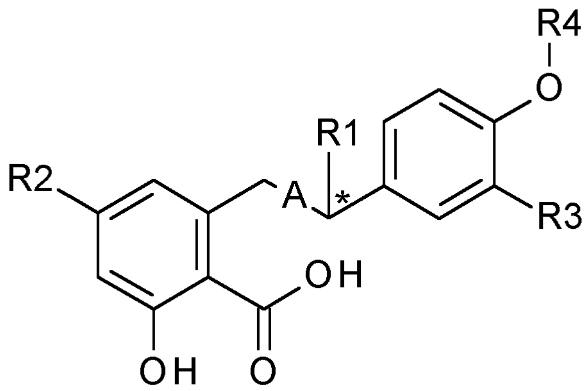

**(Ib)**

wobei
A eine E oder Z-Doppelbindung und gleichzeitig R1 ein Wasserstoffatom darstellt kann (E) oder (Z) sein. Dies gilt auch für die nachfolgenden Ausführungen und nachfolgend dargestellten Strukturformeln der erfindungsgemäß einzusetzenden Verbindungen. Die Verbindungen der Formel (Ib) können dabei in bevorzugten Ausgestaltungen als reine Diastereomere oder als Mischungen von Diastereomere in jedem beliebigen Verhältnis zueinander miteinander kombiniert werden.

Die vorliegende Erfindung betrifft konkrete Stilbencarbonsäurederivate der Formeln **(1)** bis (6), nämlich

**(1)** 2-Hydroxy-6-[2-hydroxy-2-(4-hydroxyphenyl)ethyl]benzoesäure

**(2)** 2-Hydroxy-6-[2-hydroxy-2-(3,4-dihydroxyphenyl)ethyl]benzoesäure

**(3)** 2-Hydroxy-6-[2-hydroxy-2-(3-hydroxy-4-methoxyphenyl)ethyl]benzoesäure

**(4)** 2-Hydroxy-6-[(E)-2-(4-hydroxyphenyl)vinyl]benzoesäure

**(5)** 2-Hydroxy-6-[(E)-2-(3,4-dihydroxyphenyl)vinyl]benzoesäure

**(6)** 2-Hydroxy-6-[(E)-2-(3-hydroxy-4-methoxyphenyl)vinyl]benzoesäure

Insbesondere sind die Stilbencarbonsäurederivate der folgenden Formeln neu, nämlich

**(1)** 2-Hydroxy-6-[2-hydroxy-2-(4-hydroxyphenyl)ethyl]benzoesäure

**(2)** 2-Hydroxy-6-[2-hydroxy-2-(3,4-dihydroxyphenyl)ethyl]benzoesäure

**(3)** 2-Hydroxy-6-[2-hydroxy-2-(3-hydroxy-4-methoxyphenyl)ethyl]benzoesäure

Besonders bevorzugt ist insbesondere eine Mischung wie oben beschrieben, wobei die Verbindung(en) der Formel (I) ausgewählt ist bzw. sind aus der Gruppe bestehend aus

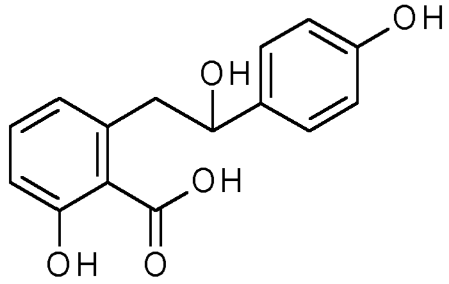

**(1)**

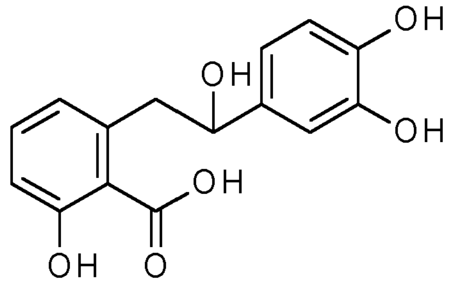

**(2)**

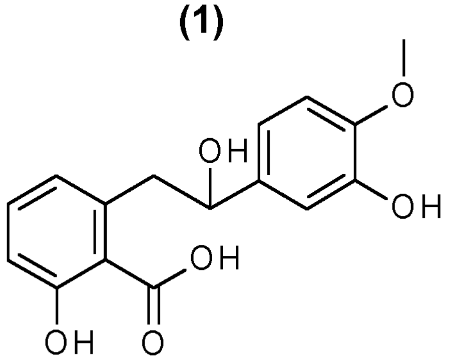

**(3)**

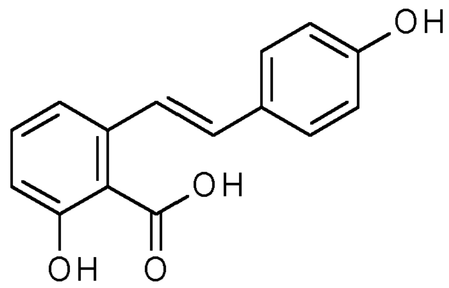

**(4)**

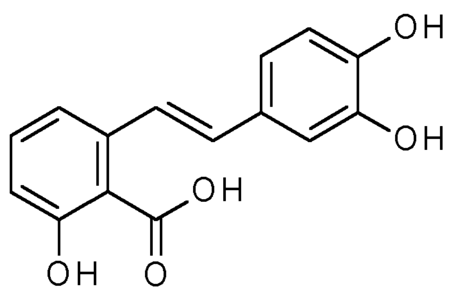

**(5)**

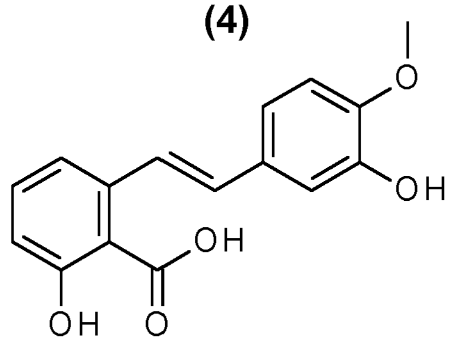

**(6)**

sowie deren physiologisch verträgliche Salze, bevorzugt ausgewählt aus den Verbindungen (1), (2) und (3).

Im Kontext der vorliegenden Erfindung sind mit den physiologisch verträglichen Salzen solche gemeint, deren Kationen ausgewählt sind aus der Gruppe, die gebildet wird von den einfach positiv geladenen Kationen der ersten

Haupt- und Nebengruppe, Ammonium und Trialkylammonium, den zweiwertig geladenen Kationen der zweiten Nebengruppe, sowie den dreiwertigen Kationen der 3. Haupt- und Nebengruppe. Bevorzugt sind Gegenkationen ausgewählt aus der Gruppe bestehend aus $Na^+$, $K^+$, $NH_4^+$, $Ca^{2+}$, $Mg^{2+}$, $Al^{3+}$ und $Zn^{2+}$ sowie deren Gemische.

Für den Fall, dass im Einzelfall ein Widerspruch zwischen der vorstehend angegebenen chemischen Nomenklatur und der jeweils dargestellten Strukturformel der erfindungsgemäß bevorzugt einzusetzenden Verbindungen der Formeln (1) bis (6) bestehen sollte, gilt die Strukturformel.

Die Stilbencarbonsäurederivate der Formel (I) können über milde Reaktionen aus natürlich vorkommenden Verbindungen hergestellt werden. Im folgenden Schema ist die erfindungsgemäße Reaktionsfolge für Verbindungen der Formeln (Ia) und (Ib) aus den natürlich vorkommenden Isocumarinen der Formel (II, vgl. weiter unten) beschrieben:

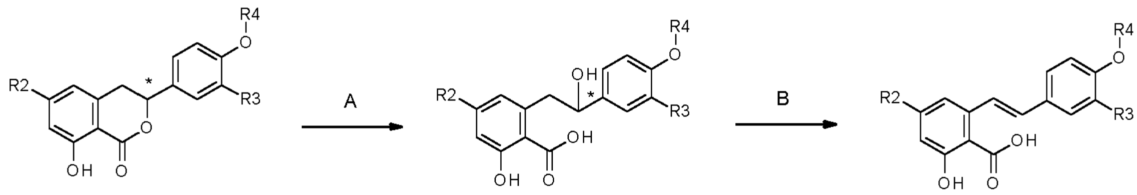


(II) (Ia) (Ib)

**Reaktion A:**

Die Stilbencarbonsäurederivate der Formel (Ia)

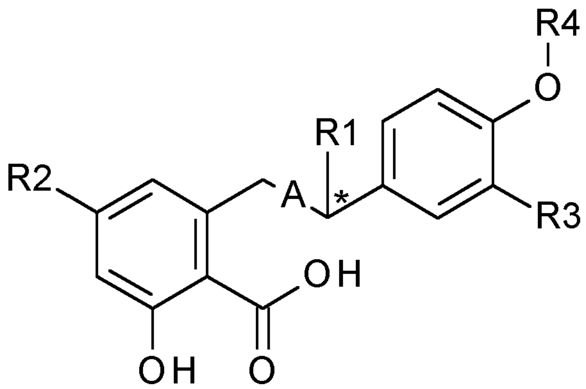

**(Ia)**

wobei

A eine Einfachbindung und R1 eine Hydroxylgruppe darstellt und R2, R3 und R4 die oben aufgeführte Bedeutung haben,

lassen sich durch hydrolytische Öffnung der Isocumarine der allgemeinen Formel (II)

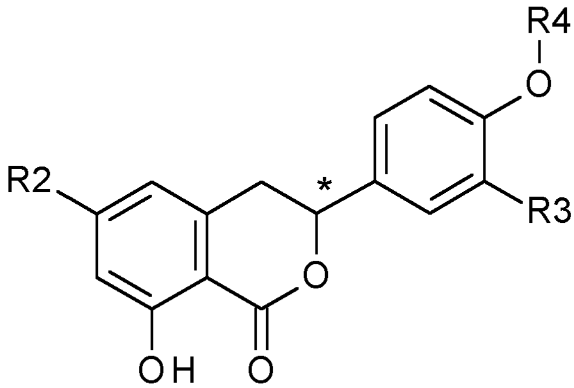

(II)

wobei

R2 ein Wasserstoffatom oder eine Hydroxylgruppe darstellt, und

R3 ein Wasserstoffatom, eine Hydroxylgruppe oder eine Methoxygruppe darstellt, und

R4 ein Wasserstoffatom oder eine Methylgruppe darstellt,

wobei eine oder mehrere der Hydroxygruppen auch glycosyliert, bevorzugt beta-D-glycosidiert sein kann

bei basischen bis schwach sauren Bedingungen öffnen, wobei gleichzeitig oder nachfolgend enzymatisch oder durch schwach saure Hydrolyse ein möglicher Glycosidrest gespalten wird. Dabei werden Lösungsmittelsysteme mit wassermischbaren Lösungsmitteln und Wasser, bevorzugt in Gewichtsverhältnissen 100:1 bis 1:100, besonders bevorzugt 50:1 bis 1:10, insbesondere 10:1 bis 1:10, verwendet, die eine wirksame Konzentration eines oder mehrerer der Isocumarine der allgemeinen Formel (II) enthalten und die mit Hilfe natürlicher oder nicht-natürlicher anorganischer oder organischer Basen oder natürlicher oder nicht-natürlicher anorganischer oder organischer Säuren auf einen pH-Wert von 3 bis 14, bevorzugt 4 bis 13, besonders bevorzugt 5.5 bis 12 eingestellt sind. Dabei kann die Temperatur der Reaktionsmischung bei Normaldruck von 0°C bis zum Siedepunkt, bevorzugt von 10°C bis zum Siedepunkt, besonders bevorzugt von 20°C bis zu Siedepunkt gehen. Weiterhin ist eine Reaktion unter Eigendruck möglich, wobei auch höhere Temperaturen, z.B. 100 bis 150°C, bevorzugt 110 bis 140°C erreicht werden können. Es ist von Vorteil, die Reaktion in einer inerten Atmosphäre durchzuführen, wobei die Gase COz, Argon oder Stickstoff bevorzugt eingesetzt werden können. Wassermischbare Lösungsmittel sind bevorzugt ausgewählt aus der Gruppe: Ethanol, Methanol, 1- oder 2-Propanol, 1-Butanol, 1,2-Propylenglycol, 1,3-Propylenglycol, 1,4-Butandiol, Glycerol, Tetrhydrofuran, oder 1,4-Dioxan. Anorganische Basen sind bevorzugt die Carbonate, Hydrogencarbonate, Oxide oder Hydroxide der folgenden Alkali und Erdalkalimetalle: Lithium, Natrium, Kalium, Calcium, Magnesium, Aluminium, Zink, Ammonium. Organische Basen können bevorzugt L-Prolin, L-Lysin oder L-Arginin sein.

Bevorzugt werden als Isocumarine der allgemeinen Formel (II) die natürlich vorkommenden Vertreter gewählt.

Besonders bevorzugte natürlich vorkommenden Isocumarine der allgemeinen Formel (II) sind z.B.:

(R)- oder (S)-Phyllodulcin oder beliebige Mischungen der Enantiomeren, bevorzugt 100:0 bis 50:50 (R)- zu (S)-Phyllodulcin, besonders bevorzugt 90:10 bis 50:50. insbesondere 80:20 bis 60:40

(R)- oder (S)-Hydrangenol oder beliebige Mischungen der Enantiomeren, bevorzugt 100:0 bis 50:50 (R)- zu (S)-Hydrangenol, besonders bevorzugt 90:10 bis 50:50. insbesondere 80:20 bis 60:40

(R)- oder (S)-Thunberginol G oder beliebige Mischungen der Enantiomeren, bevorzugt 100:0 bis 50:50 (R)- zu (S)-Thunberginol G, besonders bevorzugt 90:10 bis 50:50. insbesondere 80:20 bis 60:40

(R)- oder (S)-Phyllodulcin-3'-glucosid oder beliebige Mischungen der Diasteromeren, bevorzugt 100:0 bis 50:50 (R)- zu (S)-Phyllodulcin-3'-glucosid, besonders bevorzugt 90:10 bis 50:50. insbesondere 80:20 bis 60:40

(R)- oder (S)-Hydrangenol-3'-glucosid oder beliebige Mischungen der Diasteromeren, bevorzugt 100:0 bis 50:50 (R)- zu (S)-Hydrangenol-3'-glucosid, besonders bevorzugt 90:10 bis 50:50. insbesondere 80:20 bis 60:40

(R)- oder (S)-Thunberginol G-3'-glucosid oder beliebige Mischungen der Diasteromeren, bevorzugt 100:0 bis 50:50 (R)- zu (S)-Thunberginol G-3'-glucosid, besonders bevorzugt 90:10 bis 50:50. insbesondere 80:20 bis 60:40

(R)- oder (S)-Phyllodulcin-7-glucosid oder beliebige Mischungen der Diasteromeren, bevorzugt 100:0 bis 50:50 (R)- zu (S)-Phyllodulcin-7-glucosid, besonders bevorzugt 90:10 bis 50:50. insbesondere 80:20 bis 60:40

(R)- oder (S)-Phyllodulcin-3',7-diglucosid oder beliebige Mischungen der Diasteromeren, bevorzugt 100:0 bis 50:50 (R)- zu (S)-Phyllodulcin-3',7-diglucosid, besonders bevorzugt 90:10 bis 50:50. insbesondere 80:20 bis 60:40

Insbesondere bevorzugt ist die "in situ"-Bildung in wässrigen Mischungen oder deren Vor- und Zwischenprodukten (Halbfertigprodukten), z.B. (vgl. weiter unten), wobei ein Isocumarin der Formel (II) in einer entsprechenden Menge zugesetzt wird und bei pH-Werten von 5,5 bis 10 in die Stilbencarbonsäurederivate der Formel (Ia) umgewandelt wird und anschließend die Zubereitung mit einer entsprechenden Genusssäure auf den Ziel-pH, z.B. 2 bis 4, eingestellt wird.

**Reaktion B:**

Die Stilbencarbonsäurederivate der Formel (Ib)

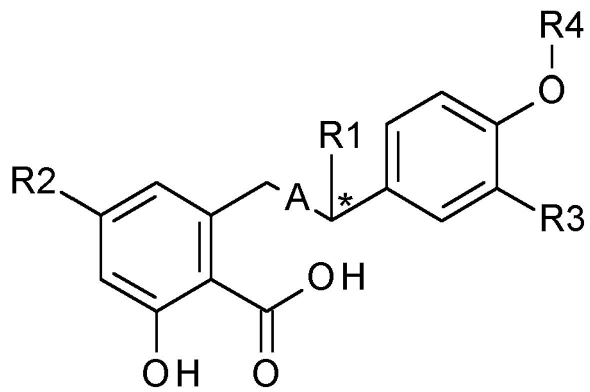

**(I)**

wobei
A eine E oder Z-Doppelbindung und gleichzeitig R1 ein Wasserstoffatom darstellt und R2, R3 und R4 die oben aufgeführte Bedeutung haben, lassen sich z.B. aus den Stilbencarbonsäurederivaten der Formel (Ia)

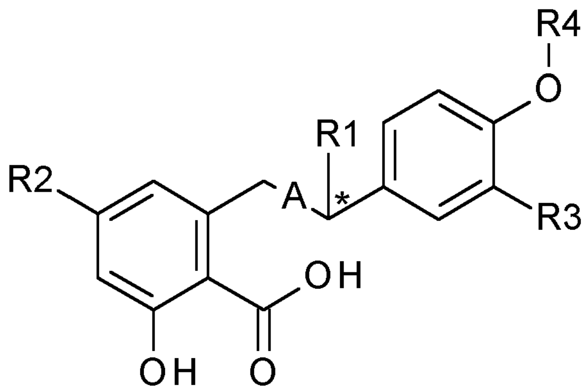

**(Ia)**

wobei
A eine Einfachbindung darstellt und $R^1$ eine Hydroxylgruppe darstellt und R2, R3 und R4 die oben aufgeführte Bedeutung

haben, durch Eliminierung von Wasser herstellen. Dabei kann die Reaktion unter wässrigen und milden Bedingungen durch Zugabe von natürlichen oder nicht-natürlichen organischen oder anorganischen Säuren erzielt werden. Eine gute Ausbeuten liefernde Alternative ist die Erwärmung in natürlichen oder nicht-natürlichen protischen, höhersiedenden Lösungsmitteln; bevorzugt sind dabei höhere Alkohole, insbesondere Di- oder Polyole, bevorzugt z.B. 1,2-Propylenglycol(e), Glycerol, 1,3-Propanol unter Schutzgas bei Temperaturen über dem Siedepunkt von Wasser, bevorzugt bei 100°C bis 250 °C, bevorzugt bei 120°C bis 20°C, besonders bevorzugt bei 150°C bis 200 °C.

Die Stilbencarbonsäurederivate der Formel (Ib) können auch in einer sogenannten Eintopfreaktion direkt aus den Isocumarinen der allgemeinen Formel (II) ohne explizite Isolierung der Zwischenprodukte, der Stilbencarbonsäurederivate der Formel (Ia), hergestellt werden, indem die Reaktionsbedingungen unter Reaktion A und B entsprechend angepasst werden.

Substanzen, die unangenehme Geschmackseindrücke verursachen, sind im Rahmen der vorliegenden Erfindung entweder Stoffe, die bitter, adstringierend, pappig, kalkig, staubig, trocken, mehlig, ranzig und/oder metallisch schmecken, bevorzugt bitter, adstringierend oder metallisch, oder Stoffe, die einen bitteren, adstringierenden, pappigen, kalkigen, staubigen, trockenen, mehligen, ranzigen und/oder metallischen Nachgeschmack aufweisen, bevorzugt einen bitteren, adstringierenden oder metallischen Nachgeschmack.

Die vorgenannten unangenehm schmeckenden Stoffe können weitere, nicht unangenehme Geschmacks- und/oder Geruchsqualitäten besitzen. Im Rahmen dieses Textes sind als nicht unangenehme Geschmacksqualitäten bevorzugt die Eindrücke würzig, umami, süß, salzig, sauer, scharf, kühlend, wärmend, brennend oder kribbelnd zu nennen.

Stoffe, die bitter, adstringierend, pappig, kalkig, staubig, trocken, mehlig, ranzig und/oder metallisch schmecken, sind beispielsweise: Xanthinalkaloide, Xanthine (Coffein, Theobromin, Theophyllin), Alkaloide (Chinin, Brucin, Strychnin, Nicotin), phenolische Glycoside (z.B. Salicin, Arbutin), Flavanoidglycoside (z.B. Neohesperidin, Eriocitrin, Neoeriocitrin, Narirutin, Hesperidin, Naringin), Chalcone oder Chalconglycoside, Dihydrochalconglycoside (Phloridzin, Trilobatin), hydrolisierbare Tannine (Gallus- oder Elagsäureester von Kohlenhydraten, z.B. Pentagalloylglucose), nichthydrolisierbare Tannine (ggfs. galloylierte Catechine oder Epicatechine und deren Oligomeren, z.B. Proanthyocyanidine oder Procyanidine, Thearubigenin), Flavone und deren Glycoside (z.B. Quercetin, Quercitrin, Rutin, Taxifolin, Myricetin, Myrictrin), andere Polyphenole (γ-Oryzanol, Kaffeesäure oder deren Ester), terpenoide Bitterstoffe (z.B. Limonoide wie Limonin oder Nomilin aus Zitrusfrüchten, Lupolone und Humolone aus Hopfen, Iridoide, Secoiridoide), Absinthin aus Wermut, Amarogentin aus Enzian, metallische Salze (Kaliumchlorid, Natriumsulfat, Magnesiumsalze, Eisensalze, Aluminiumsalze, Zinksalze, Calciumcarbonat, Magnesiumhydroxid, Magnesiumcarbonat oder Magnesiumsulfat), pharmazeutische Wirkstoffe (z.B. Naproxen, Diphenylhydramin, Famotidin, Aspirin, Salicin, Paracetamol (Acetaminophen, APAB), Ephidrin, Pseudoephidrin, Loratidin, Cetirizin, Doxylamin, Loperamid, Budenosid, Ambroxol, Omeprazol, Esomeprazol, Brompheniramin, Avobenzon, Sildenafil, Ibuprofen, Guafenesin, Dextromorphan, Antibiotika wie Oxafloxazin oder Chinin und deren jeweiligen physiologisch verträglichen Salze), Vitamine (beispielsweise Vitamin H, Vitamine aus der B-Reihe wie Vitamin B1, B2, B6, B12, Niacin, Panthotensäure), Denatoniumbenzoat oder andere Denatoniumsalze, Sucraloseoctaacetat, Harnstoff, ungesättigte Fettsäuren, insbesondere ungesättigte Fettsäuren in Emulsionen, Aminosäuren (z.B. Leucin, Isoleucin, Valin, Tryptophan, Prolin, Histidin, Tyrosin, Arginin, Lysin oder Phenylalanin, wobei die L-Aminosäuren L-Leucin, L- Isoleucin, L-Valin, L-Tryptophan, L-Arginin, und L- Phenylalanin bevorzugt sind), Peptide (insbesondere Peptide mit einer Aminosäure aus der Gruppe L-Leucin, L-Isoleucin, L-Valin, L-Tryptophan, L-Prolin, L-Arginin oder L-Phenylalanin am N- oder C-Terminus). Die vorgenannten Stoffe können entweder einzeln oder als Gemisch vorkommen, bevorzugt auch als natürliche Extrakte aus frischen, getrockneten, gerösteten, und/oder fermentierten Pflanzen oder Pflanzenteilen, so z.B. als Extrakte aus Blättern, Früchten, Ästen, Wurzeln, Fruchtschalen, Kernen, Samen z.B. aus Camellia sinensis, Camellia japonica, Coffea ssp., Cocoa theobroma, Vitis vinifera, Citrus ssp. und Hybriden, Poncirus ssp. und Hybriden, Perilla, Humulus lupulus, oder verwandten Arten stammen.

Erfindungsgemäß zu maskierende Bitterstoffe sind dabei insbesondere Xanthine (insbesondere Coffein, Theobromin, Theophyllin), phenolische Glycoside (insbesondere Salicin, Arbutin), Flavanoidglycoside (insbesondere Neohesperedin, Eriocitrin, Neoeriocitrin, Narirutin, Hesperidin, Naringin), Chalcone oder Chalconglycoside, Dihydrochalconglycoside (insbesondere Phloridzin, Trilobatin), hydrolisierbare Tannine (insbesondere Gallus- oder Ellagsäureester von Kohlenhydraten, z.B. Pentagalloylglucose), nichthydrolisierbare Tannine (insbesondere galloylierte Catechine oder Epicatechine und deren Oligomeren, z.B. Proanthyocyanidine oder Procyanidine, Thearubigenin), Flavone und deren Glycoside (insbesondere Quercetin, Quercitrin, Rutin, Taxifolin, Myricetin, Myrictrin), Kaffeesäure oder deren Ester, terpenoide Bitterstoffe (insbesondere Limonin, Nomilin, Lupolone und Humolone), metallische Salze (Kaliumchlorid, Natriumsulfat, Magnesiumsalze, Eisensalze, Aluminiumsalze, Zinksalze), pharmazeutische Wirkstoffe (z.B. Naproxen, Diphenylhydramin, Famotidin, Aspirin, Salicin, Paracetamol (Acetaminophen, APAB), Ephidrin, Pseudoephidrin, Loratidin, Cetirizin, Doxylamin, Loperamid, Budenosid, Ambroxol, Omeprazol, Esomeprazol, Brompheniramin, Avobenzon, Sildenafil, Ibuprofen, Guafenesin, Dextromorphan, Antibiotika wie Oxafloxazin oder Chinin und deren jeweiligen physiologisch verträglichen Salze), Aminosäuren (z.B. Leucin, Isoleucin, Valin, Tryptophan, Prolin, Histidin, Tyrosin, Arginin, Lysin oder Phenylalanin, wobei die L-Aminosäuren L-Leucin, L- Isoleucin, L-Valin, L-Tryptophan, L-Arginin, und L-

Phenylalanin bevorzugt sind), Peptide (insbesondere Peptide mit einer Aminosäure aus der Gruppe L-Leucin, L-Isoleucin, L-Valin, L-Tryptophan, L-Prolin, L-Arginin oder L-Phenylalanin am N- oder C-Terminus).

Besonders bevorzugte zu maskierende Bitterstoffe sind ausgewählt aus der Gruppe bestehend aus Coffein, Theobromin, Chinin, Salicin, Arbutin, Neohesperedin, Eriocitrin, Neoeriocitrin, Narirutin, Hesperidin, Naringin, Phloridzin, Catechin, Epicatechin, Epigallocatechingallat (EGCG), Gallocatechin, Gallocatechin-3-gallat, Procyanidin B2, Procyanidin B5, Procyanidin C1, Thearubigenin, Rutin, Taxifolin, Myricetin, Myrictrin, Kaffeesäure oder deren Ester, Limonin und Nomilin, Aminosäuren (z.B. Leucin, Isoleucin, Valin, Tryptophan, Prolin, Histidin, Tyrosin, Arginin, Lysin oder Phenylalanin, wobei die L-Aminosäuren L-Leucin, L- Isoleucin, L-Valin, L-Tryptophan, L-Arginin, und L- Phenylalanin bevorzugt sind), Peptide mit einer Aminosäure aus der Gruppe L-Leucin, L-Isoleucin, L-Valin, L-Tryptophan, L-Prolin, L-Arginin oder L-Phenylalanin am N- oder C-Terminus, Kaliumchlorid, Naproxen, Diphenylhydramin, Famotidin, Aspirin, Salicin, Paracetamol (Acetaminophen, APAB), Ephidrin, Pseudoephidrin, Loratidin, Cetirizin, Doxylamin, Loperamid, Budenosid, Ambroxol, Omeprazol, Esomeprazol, Brompheniramin, Avobenzon, Sildenafil, Ibuprofen, Guafenesin, Dextromorphan, Antibiotika wie Oxafloxazin oder Chinin und deren jeweiligen physiologisch verträglichen Salze.

Stoffe, die einen bitteren, adstringierenden, pappigen, kalkigen, staubigen, trockenen, mehligen, ranzigen und/oder metallischen Neben- und/oder Nachgeschmack haben, können Aroma- oder Geschmackstoffe mit einem nicht unangenehmen Primärgeschmack (beispielsweise süß, salzig, würzig, sauer) und/oder -geruch sein, und z.B. zur Gruppe der Süßstoffe, Zuckeraustauschstoffe oder der Aromastoffe gehören. Beispielsweise seien genannt: Aspartam, Neotam, Superaspartam, Alitam, Saccharin, Sucralose, Tagatose, Monellin, Monatin, Stevioside, Rubusosid, Steviosid, Rebaudiosid A, Rebaudioside C, Thaumatin, Miraculin, Glycyrrhizin (Glycyrrhizinsäure), Glycyrrhetinsäure oder deren Derivate, Cyclamat oder die physiologisch akzeptablen Salze der vorgenannten Verbindungen.

Da sich die Bitterintensität verschiedener Bitterstoffe deutlich unterscheidet, wird die Bitterkeit einer Verbindung im Folgenden manchmal in relativen Bitterequivalenten (RBE) angegeben. Als Bezugssubstanz wird hier der bekannte Bitterstoff Coffein verwendet. Die Bestimmung des RBE-Wertes als Maß für die relative Bitterkeit einer Probe erfolgt mit Hilfe einer Skala von 1 bis 10. Eine relative Bitterkeit von 1, d.h. eine RBE-Wert von 1, entspricht dabei der Bitterkeit einer Menge von Coffein in der Dosierung von 100 mg/kg zu untersuchender Probe. Eine relative Bitterkeit von 5, d.h. eine RBE-Wert von 5, entspricht dabei der Bitterkeit einer Menge von Coffein in der Dosierung von 500 mg/kg zu untersuchender Probe. Die zu untersuchende Probe kann dabei in ihrer Zusammensetzung stark variieren. So kann es sich bei der zu untersuchenden Probe beispielsweise um eine der Ernährung, der Mundpflege, dem Genuss dienende Zubereitung, eine orale pharmazeutischen Zubereitung oder eine kosmetischen Zubereitung, beispielsweise um ein Lebensmittel, ein Getränk, ein Kaugummi, ein Mundwasser, ein Bonbon, einen Hustensaft oder eine Tablette handeln. Die verwendete Skala zur Bestimmung der RBE-Werte entspricht ISO 4121 [Sensory Analysis- Guidelines forthe use of quantitative response scales; A.3 Beispiel 2].Die Auswahl der Panelisten zur Bestimmung der RBE-Werte erfolgt gemäß ISO 8586-1 [Sensory analysis - General guidance for the selection, training, and monitoring,of assessors - Part 1: Selected assessors]. Die Zahl der Panelisten entspricht dabei ISO 8586-I, 4.2.3 [Number of persons to be selected, zusammen mit ISO 6658 Sensory analysis - Methodology - General guidance - 5.3.5 Scoring (5 oder mehr ausgewählte Panelisten)]. Dabei besteht der entscheidende Vorteil der erfindungsgemäß einzusetzenden Stilbencarbonsäurederivate, dass auch solche Bitterstoffe in ihrem unangenehmen Geschmack kompensiert werden können, wenn sie in einer Konzentration vorliegen, die mindestens 2 relativen Bitterequivalenten entspricht.

Bevorzugt betrifft die vorliegende Erfindung Mischungen wie oben beschrieben, wobei die Substanz(en) des Bestandteils ii) ausgewählt ist bzw. sind aus Bitterstoffen und Süßstoffen, die einen bitteren Neben- oder Nachgeschmack haben.

Weiterhin bevorzugt ist der bzw. sind die Bitterstoff(e) ausgewählt aus Catechinen, Proanthocyanidinen, Coffein, Theobromin und Naringin und/oder ist der bzw. sind die Süßstoff(e), die einen bitteren Neben- oder Nachgeschmack haben, ausgewählt aus Acesulfam K, Saccharin und seinen Salzen, Cyclamat und seinen Salzen, Advantam, Aspartam, Neotam, Sucralose, Steviosiden und Rebaudiosiden, insbesondere Rebaudiosid A, Rebaudiosid C, Rebaudiosid D, Rebaudiosid E, Rebaudiosid M, Rebaudiosid X, Rubusosid, Mogrosiden, insbesondere Mogrosid V.

Süßstoffe, insbesondere solche aus Stevia ssp., Momordica grosvenori (Luo Han Guo), oder Rubus ssp. deren unangenehmer Eindruck im Mundraum erfindungsgemäß verringert bzw. unterdrückt wird, ohne dass dabei die Süßkraft verloren geht, die Süßkraft gegebenenfalls sogar erhöht und dadurch sogar die notwendige Menge an Süßstoffen verringert werden kann, sind vorzugsweise ausgewählt aus der Gruppe bestehend aus:

- Magap, Natriumcyclamat, Acesulfam K, Neohesperidindihydrochalkon, Saccharin, Saccharin-Natriumsalz, Aspartam, Superaspartam, Neotam, Alitam, Sucralose, Lugduname, Carrelame, Sucrononate, Sucrooctate, und/oder

- aus der Gruppe der natürlich vorkommenden Süßstoffe bestehend aus Miraculin, Curculin, Monellin, Mabinlin, Thaumatin, Curculin, Brazzein, Pentadin, D-Phenylalanin, D-Tryptophan, oder aus natürlichen Quellen gewonnenen Extrakte oder Fraktionen, enthaltend diese Aminosäuren und/oder Proteine, Neohesperidindihydrochalkon, Naringindihydrochalkon, Steviolgylcoside, Stevioside, Steviolbiosid, Rebaudioside (beispielsweise Rebaudiosid A, Rebaudiosid B, Rebaudiosid C, Rebaudiosid D, Rebaudiosid E, Rebaudiosid F, Rebaudiosid G, Rebaudiosid H, Rebaudiosid M, Rebaudiosid N, Rebaudiosid O, Rebaudiosid P, Rebaudiosid R, Rebaudiosid S, Rebaudiosid X, Dulcoside, Rubusoside), Suavioside A, Suavioside B, Suavioside G, Suavioside H, Suavioside I, Suavioside J, Baiyunoside 1, Baiyunoside 2, Phlomisoside 1, Phlomisoside 2, Phlomisoside 3, Phlomisoside 4, Abrusoside A, Abrusoside B, Abrusoside C, Abrusoside D, Cyclocaryoside A und Cyclocaryoside I, Oslandin, Polypodosid A, Strogin 1, Strogin 2, Strogin 4, Selligueanin A, Dihydroquercetin-3-acetat, Perillartin, Telosmosid A15, Periandrin I-V, Pterocaryoside, Cyclocaryoside, Mukurozioside, trans-Anethol, trans-Cinnamaldehyd, Bryoside, Bryonoside, Bryonodulcoside, Carnosifloside, Scandenoside, Gypenoside, Trilobatin, Phloridzin, Dihydroflavanole, Hematoxylin, Cyanin, Chlorogensäure, Albiziasaponin, Telosmoside, Gaudichaudiosid, Mogrosid V, andere Mogroside, Hernandulcine, Monatin, Glycyrrhetinsäure und deren Derivaten (beispielsweise deren Glycoside wie Glycyrrhizin) oder deren Kalium-, Natrium-, Calcium- oder Ammoniumsalze.

Die vorliegende Erfindung betrifft auch Mischungen wie oben beschrieben, zusätzlich umfassend einen oder mehrere (weitere) Geruchs- und/oder Geschmacksstoffe. Besonders bevorzugt ist diesem Zusammenhang eine Mischung die neben den oben beschriebenen Bestandteilen (R)- oder (S)-Phyllodulcin oder Gemische davon enthält.

Bevorzugt enthalten erfindungsgemäße Mischungen ein oder mehrere weitere Aromastoffe, Geschmackstoffe und/oder Geschmackskorrigenzien, um den Geschmack und/oder Geruch der Zubereitung abzurunden, zu verbessern bzw. zu verfeinern. Geeignete weitere Aromastoffe, Geschmackstoffe und/oder Geschmackskorrigenzien sind vorzugsweise synthetische oder natürliche Aromastoffe, Geschmackstoffe und/oder Geschmackskorrigenzien, dabei vorzugsweise speichelfördernde, prickelnd, scharf und/oder warm schmeckende Substanzen, ätherische Öle oder Pflanzenextrakte, sowie gegebenenfalls zusätzlich zum Verzehr geeignete Hilfs- und Trägerstoffe.

Insbesondere können in der erfindungsgemäßen Mischung zusätzlich enthalten sein:

ein oder mehrere weitere bittermaskierende Aroma- und/oder Geschmackstoffe einschließlich deren physiologisch verträglichen Salzen, jeweils ausgewählt aus der Gruppe bestehend aus

- Hydroxyflavanonen, insbesondere Homoeriodictyol, Naringenin und Eriodictyol und deren physiologisch verträglichen Salzen,
- Hydroxybenzoesäureamiden, insbesondere 2,4-Dihydroxybenzoesäurevanillylamid,
- Neoflavonoiden, insbesondere 5,7-Dihydroxy-4-(4-hydroxy-3-methoxy-phenyl)-chroman-2-on oder 5,7-Dihydoxy-4-(4-hydroxy-phenyl)-chroman-2-on
- Vanillyllignanen, insbesondere Matairesinol, Hydroxymatairesinol oder Lariciresinol

und

optional ein oder mehrere weitere Aromastoffe einschließlich deren physiologisch verträglichen Salzen, wobei wenigstens einer dieser Aromastoffe ein die Süße verstärkender Aromastoff ist und ausgewählt wird aus der Gruppe bestehend aus

- Hesperitin
- 4-Hydroxydihydrochalkone, insbesondere Phloretin
- Hydroxyflavanen, insbesondere (R)- und/oder (S)-3',7-Dihydroxy-4'-methoxyflavan
- Dihydrochalkonen, insbesondere Hesperetindihydrochalkon oder 5-Deoxyhesperetindihydrochalkon
- Neoflavonoiden, insbesondere, 5-Hydroxy-4-(4-hydroxy-3-methoxy-phenyl)-7-methoxy-2-chromanon, 7-Hydroxy-4-(4-hydroxy-3-methoxy-phenyl)-5-methoxy-2-chromanon
- Balansinen, bevorzugt Balansin A
  zusätzlich kann noch eine oder mehrere süße Kohlenhydrate oder Zuckeralkohole, z.B. Saccharose, Glucose, Fructose, Galactose, Mannose, Tagatose, Erythritol, Maltit, Dulcit enthalten sein.

Erfindungsgemäße Mischungen enthalten vorzugsweise zumindest einen, zwei, drei, vier, fünf, sechs, sieben,

acht, neun, zehn oder mehr weitere Aromastoffe.

Im Rahmen der vorliegenden Erfindung bevorzugt einzusetzende (einen oder mehrere) Aromastoffe werden vorzugsweise gewählt aus der Gruppe bestehend aus: Acetophenon, Allylcapronat, alpha-Ionon, beta-Ionon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion®), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methyl-buttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

Die vorliegende Erfindung betrifft weiterhin oral anwendbare Produkte enthaltend eine Mischung wie oben beschrieben ausgewählt aus der Gruppe bestehend aus pharmazeutischen Zubereitungen, der Zahn- und Mundpflege dienenden Zubereitungen, Halbfertigwaren, flüssigen oder festen Nahrungs- oder Genussmitteln.

Unter oral anwendbaren Produkten, die Gegenstand der vorliegenden Erfindung sind, werden im Folgenden nicht nur solche Produkte verstanden, die der menschlichen Ernährung dienen, sondern auch solche Mittel, die mit der Mundschleimhaut in Kontakt kommen. Somit umfasst diese Bezeichnung Nahrungsmittel auf der einen und Mund- und Zahnreinigungs- und -pflegemittel sowie oral verabreichte pharmazeutische Mittel auf der anderen Seite.

Vorzugsweise handelt es sich bei den oral anwendbaren Produkten um Backwaren, beispielsweise Brot, Trockenkekse, Kuchen, sonstiges Gebäck, Süßwaren (beispielsweise Schokoladen, Schokoladenriegelprodukte, sonstige Riegelprodukte, Fruchtgummi, Hart- und Weichkaramellen, Kaugummi), alkoholische oder nicht-alkoholische Getränke (beispielsweise Kaffee, Tee, Eistee, Wein, weinhaltige Getränke, Bier, bierhaltige Getränke, Liköre, Schnäpse, Weinbrände, (carbonisierte) fruchthaltige Limonaden, (carbonisierte) isotonische Getränke, (carbonisierte) Erfrischungsgetränke, Nektare, Schorlen, Obst- und Gemüsesäfte, Frucht- oder Gemüsesaftzubereitungen, Instantgetränke (beispielsweise Instant-Kakao-Getränke, Instant-Tee-Getränke, Instant-Kaffeegetränke, Instant-Fruchtgetränke), Fleischprodukte (beispielsweise Schinken, Frischwurst- oder Rohwurstzubereitungen, gewürzte oder marinierte Frisch- oder Pökelfleischprodukte), Eier oder Eiprodukte (Trockenei, Eiweiß, Eigelb), Getreideprodukte (beispielsweise Frühstückscerealien, Müsliriegel, vorgegarte Fertigreis-Produkte), Milchprodukte (beispielsweise Milchgetränke, Buttermilchgetränke, Milcheis, Joghurt, Kefir, Frischkäse, Weichkäse, Hartkäse, Trockenmilchpulver, Molke, Molkegetränke, Butter, Buttermilch, teilweise oder ganz hydrolisierte Milchprotein-haltige Produkte), Produkte aus Sojaprotein oder anderen Sojabohnen-Fraktionen (beispielsweise Sojamilch und daraus gefertigte Produkte, Fruchtgetränke mit Sojaprotein, Sojalecithin-haltige Zubereitungen, fermentierte Produkte wie Tofu oder Tempe oder daraus gefertigte Produkte), Produkte aus anderen pflanzlichen Proteinquellen, beispielsweise Haferprotein-Getränke, Fruchtzubereitungen (beispielsweise Konfitüren, Fruchteis, Fruchtsoßen, Fruchtfüllungen), Gemüsezubereitungen (beispielsweise Ketchup, Soßen, Trockengemüse, Tiefkühlgemüse, vorgegarte Gemüse, eingekochte Gemüse), Knabberartikel (beispielsweise gebackene oder frittierte Kartoffelchips oder Kartoffelteigprodukte, Extrudate auf Mais- oder Erdnussbasis), Produkte auf Fett- und Ölbasis oder Emulsionen derselben (beispielsweise Mayonnaise, Remoulade, Dressings), sonstige Fertiggerichte und Suppen (beispielsweise Trockensuppen, Instant-Suppen, vorgegarte Suppen), Gewürze, Würzmischungen sowie insbesondere Aufstreuwürzungen (englisch: Seasonings), die beispielsweise im Snackbereich Anwendung finden.

Alternativ kommen Zahnpasten, Mundwässer, Erkältungsmittel oder Wirkstoffkapseln in Betracht.

Die oral anwendbaren Produkte im Sinne der Erfindung können auch als Halbfertigware zur Herstellung weiterer oral anwendbarer Produkte dienen. Die oral anwendbaren süß schmeckenden Produkte im Sinne der Erfindung können auch in Form von Kapseln, Tabletten (nichtüberzogene sowie überzogene Tabletten, beispielsweise magensaftresistente Überzüge), Dragees, Granulaten, Pellets, Feststoffmischungen, Dispersionen in flüssigen Phasen, als Emulsionen, als Pulver, als Lösungen, als Pasten oder als andere schluck- oder kaubare Zubereitungen als Nahrungsergänzungsmittel vorliegen.

Die in den oral anwendbaren Produkten eingesetzte Gesamtmenge der erfindungsgemäßen Mischung umfassend Bestandteile i) und ii) wie oben beschrieben kann bezogen auf die konfektionierten Endprodukte etwa 0.0001 bis etwa 1 und vorzugsweise etwa 0.001 bis 0.5 Gew.-% betragen. Insbesondere kann die Menge der Verbindung(en) der Formel (I) bezogen auf die Halbfertigwaren oder die konfektionierten Endprodukte im Bereich von 0.1 mg/kg (entsprechend 0.1 ppm) bis 1 g/kg vorzugsweise im Bereich von 0.5 bis 900 mg/kg (entsprechend 0.5 bis 900 ppm), bevorzugt im Bereich von 1 bis 500 mg/kg, weiter bevorzugt im Bereich von 3 bis 300 mg/kg, besonders bevorzugt im Bereich von 5 bis 200 mg/kg, am meisten bevorzugt im Bereich von 10 bis 100 mg/kg jeweils bezogen auf das Gesamtgewicht des Produktes liegen.

Demnach betrifft die vorliegende Erfindung insbesondere ein oral anwendbares Produkt wie oben beschrieben, wobei das Produkt 0.0001 bis 1 Gew.-%, vorzugsweise 0.001 bis 0.5 Gew.-% einer Mischung wie oben beschrieben enthält, jeweils bezogen auf das Gesamtgewicht des Produktes.

Erfindungsgemäße Produkte enthalten vorzugsweise einen, zwei oder mehrere der folgenden Bitterstoffe als Bestandteil ii) der erfindungsgemäßen Mischung:

- Catechine und Proanthocyanidine in einer Gesamtmenge von zumindest 0.01 Gew.-%, vorzugsweise von zumindest 0.05 Gew.-%, bevorzugt im Bereich von 0.075 Gew.-% bis 1 Gew.-%,
- Coffein und Theobromin in einer Gesamtmenge von zumindest 0.005 Gew.-%, vorzugsweise von zumindest 0.01 Gew.-%, bevorzugt von zumindest 0.02 Gew.-%, weiter bevorzugt im Bereich von 0.025 Gew.-% bis 1 Gew.-%,
- Naringin in einer Konzentration von zumindest 0.005 Gew.-%, vorzugsweise von zumindest 0.01 Gew.-%, bevorzugt im Bereich von 0.02 Gew.-% bis 0.5 Gew.-%,
- Süßstoffe in einer Gesamtmenge von zumindest 0.005 Gew.-%, vorzugsweise von zumindest 0.05 Gew.-%, bevorzugt im Bereich von 0.1 Gew.-% bis 2 Gew.-%,

jeweils bezogen auf das Gesamtgewicht der Zubereitung.

Als oral anwendbare Produkte gemäß der vorliegenden Erfindung sind insbesondere Getränke zu nennen, die auch karbonisiert sein können. Bevorzugte erfindungsgemäße Getränke sind gegebenenfalls karbonisierte, säure- und fruchthaltige Limonaden (beispielsweise Orangen-, Limonen- oder Zitronentyp), karbonisierte isotonische Getränke (beispielsweise Orangen-, Limonen oder Zitronentyp), karbonisierte, saure Erfrischungsgetränke (beispielsweise Cola-, Zitrone-, Orange-, Limone-, Kirsch-, Apfel-, Vanille-Typ oder deren Mischung), karbonisierte Schorlen, karbonisierte Obst- und Gemüsesäfte, karbonisierte Frucht- oder Gemüsesaftzubereitungen. Dabei bedeutet karbonisiert im Sinne der Erfindung, dass das Getränk natürlich (z.B. aus Gärungsprozessen wie bei der Bierherstellung oder durch Wasser aus Kohlendioxid-haltigen Mineralquellen) eingetragenes Kohlendioxid enthält oder diesem Kohlendioxid während des Herstell- und/oder Abfüllprozesses zugesetzt wurde.

Diese können als bevorzugte Hilfs- oder Trägerstoffe Maltodextrin, Stärke, natürliche oder künstliche Polysaccharide und/oder Pflanzengummen wie modifizierte Stärken oder Gummi Arabicum, für die Aromamischungen zugelassene Lösungsmittel wie beispielsweise Ethanol, 1,2-Propylenglycol, Wasser, Glycerin, Triacetin, Pflanzenöltriglyceride, färbende Mittel, beispielsweise zugelassene Lebensmittelfarbstoffe, färbende Pflanzenextrakte, Stabilisitoren, Konservierungsstoffe, Antioxidantien und viskositätsbeeinflussende Stoffe enthalten.

Besonders bevorzugte oral anwendbare süß schmeckende Produkte im Sinne der Erfindung sind alkoholische Getränke wie Biermixgetränke, Weinmixgetränke oder sonstige, maximal 5 Vol.-% Alkohol enthaltende Mischgetränke und/oder nichtalkoholische Getränke wie Tee, Eistee (gesüßt, beispielsweise auch mit Kräuteraromen oder Fruchtaromen vom Typ Zitrone, Orange), (carbonisierte) fruchthaltige Limonaden (beispielsweise Orangen-, Limonen- oder Zitronentyp), (carbonisierte) isotonische Getränke (beispielsweise Orangen-, Limonen oder Zitronentyp), (carbonisierte) Erfrischungsgetränke (beispielsweise Cola-, Zitrone-, Orange-, Limone-, Kirsch-, Apfel-, Vanille-Typ oder deren Mischung), Nektare, Schorlen, Milchgetränke, Buttermilchgetränke, Joghurt, Kefir, Molkegetränke, Sojamilch und daraus gefertigte Produkte, Fruchtgetränke mit Sojaprotein, Haferprotein-Getränke, und Instantgetränke (beispielsweise Instant-Kakao-Getränke, Instant-Tee-Getränke, Instant-Kaffee-getränke, Instant-Fruchtgetränke), sogenannte aromatisierte Wässer ("Near Water"-Getränke, wobei letztere eine Süßung haben müssen.

"Near Water"-Getränke im Sinne dieses Textes sind (karbonisierte) Getränke auf (Mineral-)Wasserbasis, die meist klar sind, nur schwach gefärbt werden, oft nur schwach gesüßt sind (weniger als 5 % Sucrose oder Süßstoffe mit einer Süßkraft von weniger als 5 % Sucrose), meist gar nicht oder nur schwach angesäuert sind und dabei einen pH-Bereich von ca. 4 bis 8 umfassen meist nur aromatisiert sind und dabei noch mit Mineralien, Vitaminen und/oder Pflanzenextrakten versehen werden können. Im Gegensatz zu den meisten andere Getränken (z.B. Limonaden, Fruchtsaftgetränken, [Eis-]Teegetränken u.s.w.) steht dabei der "Wasser"-Charakter des Getränks immer noch im Vordergrund.

Bevorzugt sind dabei die Getränke, die einen pH-Wert kleiner 7, besonders bevorzugt kleiner 5, insbesondere bevorzugt kleiner 4 haben.

Erfindungsgemäße oral anwendbare süß schmeckende Produkte können auch der Mund- und Zahnreinigung und -pflege dienen. Beispiele hierfür sind Zahnpasten, Zahngele, Zahnpulver, Mundwässer und dergleichen. Unter Zahnpasten oder Zahncremes werden im allgemeinen gelförmige oder pastöse Zubereitungen aus Wasser, Verdickungsmitteln, Feuchthaltemitteln, Schleif- oder Putzkörpern, Tensiden, Süßmitteln, Aromastoffen, deodorierenden Wirkstoffen sowie Wirkstoffen gegen Mund- und Zahnerkrankungen verstanden. In die erfindungsgemäßen Zahnpasten können alle üblichen Putzkörper, wie z. B. Kreide, Dicalciumphosphat, unlösliches Natriummetaphosphat, Aluminiumsilikate, Calciumpyrophosphat, feinteilige Kunstharze, Kieselsäuren, Aluminiumoxid und Aluminiumoxidtrihydrat eingesetzt werden.

Bevorzugt geeignete Putzkörper für die erfindungsgemäßen Zahnpasten sind vor allem feinteilige Xerogelkieselsäuren, Hydrogelkieselsäuren, Fällungskieselsäuren, Aluminiumoxid-trihydrat und feinteiliges alpha -Aluminiumoxid oder Mischungen dieser Putzkörper in Mengen von 15 bis 40 Gew.-% der Zahnpasta.

+Als Feuchthaltemittel kommen vorwiegend niedermolekulare Polyethylenglykole, Glycerin, Sorbit oder Mischungen dieser Produkte in Mengen bis zu 50 Gew.-% in Frage. Unter den bekannten Verdickungsmitteln sind die verdickenden, feinteiligen Gelkieselsäuren und Hydrokolloide, wie z. B. Carboxymethylcellulose, Hydroxyethylcellulose, Hydroxypropylguar, Hydroxyethylstärke, Polyvinylpyrrolidon, hochmolekulares Polyethylenglykol, Pflanzengummen wie Traganth, Agar-Agar, Carragheenmoos, Gummiarabicum, Xantham-Gum und Carboxyvinylpolymere (z. B. Carbopol®-Typen) geeignet.

Zusätzlich können die Mund- und Zahnpflegemittel insbesondere oberflächenaktive Stoffe, bevorzugt anionische und nichtionische schaumstarke Tenside, wie die bereits oben genannten Stoffe, insbesondere aber Alkylethersulfat-Salze, Alkylpolyglucoside und deren Gemische enthalten. Weitere übliche Zahnpastenzusätze sind:

- Konservierungsmittel und antimikrobielle Stoffe wie z. B. p- Hydroxybenzösäuremethyl-, -ethyl- oder -propylester, Natriumsorbat, Natriumbenzoat, Bromchlorophen, Phenylsalicylsäureester, Thymol und dergleichen;
- Antizahnsteinwirkstoffe, z. B. Organophosphate wie 1-Hydroxyethan- 1.1-diphosphonsäure, 1-Phosphonpropan-1,2,3-tricarbonsäure und andere, die z. B. aus US 3,488,419, DE 2224430 A1 und DE 2343196 A1 bekannt sind;
- andere karieshemmende Stoffe wie z. B. Natriumfluorid, Natriummonofluorphosphat, Zinnfluorid;
- Süssungsmittel, wie z. B. Saccharin-Natrium, Natrium-Cyclamat, Sucrose, Lactose, Maltose, Fructose oder Apartam®, (L-Aspartyl- L-phenylalanin-methylester), Stivia-extrakte oder deren süßenden Bestandteile, insbesondere Ribeaudioside;
- geschmacksmodulierende Stoffe (beispielsweise Inositolphosphat, Nucleotide wie Guanosinmonophosphat, Adenosinmonophosphat oder andere Stoffe wie Natriumglutamat oder 2-Phenoxypropionsäure);
- Kühlwirkstoffen wie beispielsweise Menthol, Mentholderivate (beispielsweise L-Menthol, L-Menthyllactat, L-Menthylalkylcarbonate, Menthonketale, Menthancarbonsäureamide), 2,2,2-Trialkylessigsäureamiden (beispielsweise

2,2-Diisopropylpropion-säuremethylamid), Icilin-Derivate;

- Zusätzliche Aromen wie z. B. Eukalyptusöl, Anisöl, Fenchelöl, Kümmelöl, Methylacetat, Zimtaldehyd, Anethol, Vanillin, Thymol sowie Mischungen dieser und anderer natürlicher und synthetischer Aromen;
- Pigmente wie z. B. Titandioxid;
- Farbstoffe;
- Puffersubstanzen wie z. B. primäre, sekundäre oder tertiäre Alkaliphosphate oder Citronensäure/Natriumcitrat;
- wundheilende und entzündungshemmende Stoffe wie z. B. Allantoin, Harnstoff, Azulen, Kamillenwirkstoffe und Acetylsalicylsäurederivate;

Eine bevorzugte Ausführung der kosmetischen Zubereitungen sind Zahnpasten in Form einer wässrigen, pastösen Dispersion, enthaltend Poliermittel, Feuchthaltemittel, Viskositätsregulatoren und gegebenenfalls weitere übliche Komponenten, sowie die Mischung aus Menthofuran und Mentholverbindungen in Mengen von 0.5 bis 2 Gew.-%.

In Mundwässern ist eine Kombination mit wässrig-alkoholischen Lösungen verschiedener Grädigkeit von ätherischen Ölen, Emulgatoren, adstringierenden und tonisierenden Drogenauszügen, zahnsteinhemmenden, antibakteriellen Zusätzen und Geschmackskorrigenzien ohne weiteres möglich. Eine weitere bevorzugte Ausführung der Erfindung ist ein Mundwasser in Form einer wässrigen oder wässrig-alkoholischen Lösung enthaltend die Mischung aus Menthofuran und Mentholverbindungen in Mengen von 0.5 bis 2 Gew.-%. In Mundwässern, die vor der Anwendung verdünnt werden, können mit, entsprechend dem vorgesehenen Verdünnungsverhältnis, höheren Konzentrationen ausreichende Effekte erzielt werden.

Zur Verbesserung des Fließverhaltens können ferner Hydrotrope, wie beispielsweise Ethanol, Isopropylalkohol, oder Polyole eingesetzt werden; diese Stoffe entsprechen weitgehend den eingangs geschilderten Trägern. Polyole, die hier in Betracht kommen, besitzen vorzugsweise 2 bis 15 Kohlenstoffatome und mindestens zwei Hydroxylgruppen. Die Polyole können noch weitere funktionelle Gruppen, insbesondere Aminogruppen, enthalten bzw. mit Stickstoff modifiziert sein. Typische Beispiele sind

- Glycerin;
- Alkylenglycole, wie beispielsweise Ethylenglycol, Diethylenglycol, Propylenglycol, Butylenglycol, Hexylenglycol sowie Polyethylenglycole mit einem durchschnittlichen Molekulargewicht von 100 bis 1.000 Dalton;
- technische Oligoglyceringemische mit einem Eigenkondensationsgrad von 1,5 bis 10 wie etwa technische Diglyceringemische mit einem Diglyceringehalt von 40 bis 50 Gew.-%;
- Methyolverbindungen, wie insbesondere Trimethylolethan, Trimethylolpropan, Trimethylolbutan, Pentaerythrit und Dipentaerythrit;
- Niedrigalkylglucoside, insbesondere solche mit 1 bis 8 Kohlenstoffen im Alkylrest, wie beispielsweise Methyl- und Butylglucosid;
- Zuckeralkohole mit 5 bis 12 Kohlenstoffatomen, wie beispielsweise Sorbit oder Manni;
- Zucker mit 5 bis 12 Kohlenstoffatomen, wie beispielsweise Glucose oder Saccharose;
- Aminozucker, wie beispielsweise Glucamin;
- Dialkoholamine, wie Diethanolamin oder 2-Amino-1,3-propandiol;

Als Konservierungsmittel eignen sich beispielsweise Phenoxyethanol, Formaldehydlösung, Parabene, Pentandiol oder Sorbinsäure sowie die unter der Bezeichnung Surfacine® bekannten Silberkomplexe und die in Anlage 6, Teil A und B der Kosmetikverordnung aufgeführten weiteren Stoffklassen.

Als Parfümöle seien genannt Gemische aus natürlichen und synthetischen Riechstoffen. Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen),

Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, $\alpha$-Isomethylionon und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z.B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labolanumöl und Lavandinöl. Vorzugsweise werden Bergamotteöl, Dihydromyrcenol, Lilial, Lyral, Citronellol, Phenylethylalkohol, $\alpha$-Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, $\beta$-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilllat, Irotyl und Floramat allein oder in Mischungen, eingesetzt.

Als Aromen kommen beispielsweise Pfefferminzöl, Krauseminzöl, Anisöl, Sternanisöl, Kümmelöl, Eukalyptusöl, Fenchelöl, Citronenöl, Wintergrünöl, Nelkenöl, Menthol und dergleichen in Frage.

Bei den bevorzugten oral anwendbaren Produkten kann es sich auch um Kaugummis handeln. Diese Produkte enthalten typischerweise eine wasserunlösliche und eine wasserlösliche Komponente.

Die wasserunlösliche Basis, die auch als "Gummibasis" bezeichnet wird. umfasst üblicherweise natürliche oder synthetische Elastomere, Harze, Fette und Öle, Weichmacher, Füllstoffe, Farbstoffe sowie gegebenenfalls Wachse. Der Anteil der Basis an der Gesamtzusammensetzung macht üblicherweise 5 bis 95, vorzugsweise 10 bis 50 und insbesondere 20 bis 35 Gew.-% aus. In einer typischen Ausgestaltungsform der Erfindung setzt sich die Basis aus 20 bis 60 Gew.-% synthetischen Elastomeren, 0 bis 30 Gew.-% natürlichen Elastomeren, 5 bis 55 Gew.-% Weichmachern, 4 bis 35 Gew.-% Füllstoffe und in untergeordneten Mengen Zusatzstoffe wie Farbstoffe, Antioxidantien und dergleichen zusammen, mit der Maßgabe, dass sie allenfalls in geringen Mengen wasserlöslich sind.

Als geeignete synthetische Elastomere kommen beispielsweise Polyisobutylene mit durchschnittlichen Molekulargewichten (nach GPC) von 10.000 bis 100.000 und vorzugsweise 50.000 bis 80.000. Isobutylen-Isopren-Copolymere ("Butyl Elastomere"), Styrol-Butadien-Copolymere (Styrol:Butadien-Verhältnis z.B. 1: 3 bis 3: 1), Polyvinylacetate mit durchschnittlichen Molekulargewichten (nach GPC) von 2.000 bis 90.000 und vorzugsweise 10.000 bis 65.000. Polyisoprene, Polyethylen, Vinylacetat-Vinyllaurat-Copolymere und deren Gemische in Betracht. Beispiele für geeignete natürliche Elastomere sind Kautschuks wie etwa geräucherter oder flüssiger Latex oder Guayule sowie natürliche Gummistoffe wie Jelutong, Lechi caspi, Perillo, Sorva, Massaranduba balata, Massaranduba chocolate, Nispero, Rosindinba, Chicle, Gutta hang kang sowie deren Gemische. Die Auswahl der synthetischen und natürlichen Elastomere und deren Mischungsverhältnisse richtet sich im Wesentlichen danach, ob mit den Kaugummis Blasen erzeugt werden sollen ("bubble gums") oder nicht. Vorzugsweise werden Elastomergemische eingesetzt, die Jelutong, Chicle, Sorva und Massaranduba enthalten.

In den meisten Fällen erweisen sich die Elastomere in der Verarbeitung als zu hart oder zu wenig verformbar, so dass es sich als vorteilhaft erwiesen hat, spezielle Weichmacher mitzuverwenden, die natürlich insbesondere auch alle Anforderungen an die Zulassung als Nahrungsmittelzusatzstoffe erfüllen müssen. In dieser Hinsicht kommen vor allem Ester von Harzsäuren in Betracht, beispielsweise Ester von niederen aliphatischen Alkoholen oder Polyolen mit ganz oder teilweise gehärteten, monomeren oder oligomeren Harzsäuren. Insbesondere werden für diesen Zweck die Methyl-, Glycerin-, oder Pentareythritester sowie deren Gemische eingesetzt. Alternativ kommen auch Terpenharze in Betracht, die sich von alpha-Pinen, beta-Pinen, delta-Limonen oder deren Gemischen ableiten können.

Als Füllstoffe oder Texturiermittel kommen Magnesium- oder Calciumcarbonat, gemahlener Bimsstein, Silicate, speziell Magnesium- oder Aluminiumsilicate, Tone, Aluminiumoxide, Talkum, Titandioxid, Mono-, Di- und Tricalciumphosphat sowie Cellulosepolymere in Betracht.

Geeignete Emulgatoren sind Talg, gehärteter Talg, gehärtete oder teilweise gehärtete pflanzliche Öle, Kakaobutter, Partialglyceride, Lecithin, Triacetin und gesättigte oder ungesättigte Fettsäuren mit 6 bis 22 und vorzugsweise 12 bis 18 Kohlenstoffatomen sowie deren Gemische.

Als Farbstoffe und Weißungsmittel kommen beispielsweise die für die Färbung von Lebensmitteln zugelassenen FD und C-Typen, Pflanzen- und Fruchtextrakte sowie Titandioxid in Frage.

Die Basismassen können Wachse enthalten oder wachsfrei sein; Beispiele für wachsfreie Zusammensetzungen finden sich unter anderem in der Patentschrift US 5,286,500. auf deren Inhalt hiermit ausdrücklich Bezug genommen wird.

Zusätzlich zu der wasserunlöslichen Gummibasis enthalten Kaugummizubereitungen regelmäßig einen wasserlöslichen Anteil, der beispielsweise von Softener, Süßstoffen, Füllstoffen, Geschmacksstoffen, Geschmacksverstärkern, Emulgatoren, Farbstoffen, Säuerungsmitteln, Antioxidantien und dergleichen gebildet wird, hiermit der Maßgabe, dass die Bestandteile eine wenigstens hinreichende Wasserlöslichkeit besitzen. In Abhängigkeit der Wasserlöslichkeit der speziellen Vertreter können demnach einzelne Bestandteile sowohl der wasserunlöslichen wie auch der wasserlöslichen Phase angehören. Es ist jedoch auch möglich, Kombinationen beispielsweise eines wasserlöslichen und eines wasserunlöslichen Emulgators einzusetzen, wobei sich die einzelnen Vertreter, dann in unterschiedlichen Phasen befinden. Üblicherweise macht der wasserunlösliche Anteil 5 bis 95 und vorzugsweise 20 bis 80 Gew.-% der Zubereitung aus.

Wasserlösliche Softener oder Plastifiziermittel werden den Kaugummizusammensetzungen hinzugegeben um die Kaubarkeit und das Kaugefühl zu verbessern und sind in den Mischungen typischerweise in Mengen von 0.5 bis 15 Gew.-% zugegen. Typische Beispiele sind Glycerin, Lecithin sowie wässrige Lösungen von Sorbitol, gehärteten Stärkehydrolysaten oder Kornsirup.

Als Süßstoffe kommen sowohl zuckerhaltige wie zuckerfreie Verbindungen in Frage, die in Mengen von 5 bis 95, vorzugsweise 20 bis 80 und insbesondere 30 bis 60 Gew.-% bezogen auf die Kaugummizusammensetzung eingesetzt werden. Typische Saccharid-Süßstoffe sind Sucrose, Dextrose, Maltose, Dextrin, getrockneter Invertzucker, Fructose, Levulose, Galactose, Kornsirup sowie deren Gemische. Als Zuckerersatzstoffe kommen Sorbitol, Mannitol, Xylitol, gehärtete Stärkehydrolysate, Maltitol und deren Gemische in Frage. Weiterhin kommen als Zusatzstoffe auch sogenannte HIAS ("High Intensity Articifical Sweeteners") in Betracht, wie beispielsweise Sucralose, Aspartam, Acesulfamsalze, Alitam, Saccharin und Saccharinsalze, Cyclamsäure und deren Salze, Glycyrrhizine, Dihydrochalcone, Thaumatin, Monellin und dergleichen alleine oder in Abmischungen. Besonders wirksam sind auch die hydrophoben HIAS, die Gegenstand der internationalen Patentanmeldung WO 2002 091849 A1 (Wrigleys) sowie Stevia Extrakte und deren aktiven Bestandteile, insbesondere Steviosid, Rebaudiosid A, Rebaudiosid C, Rebaudiosid D oder Rebaudiosid M sind. Die Einsatzmenge dieser Stoffe hängt in erster Linie von ihrem Leistungsvermögen ab und liegt typischerweise im Bereich von 0.02 bis 8 Gew.-%.

Insbesondere für die Herstellung kalorienarmer Kaugummis eignen sich Füllstoffe wie beispielsweise Polydextrose, Raftilose, Rafitilin, Fructooligosaccharide (NutraFlora), Palatinoseoligosaaccharide, Guar Gum Hydrolysate (Sun Fiber) sowie Dextrine.

Die Auswahl an weiteren Geschmacksstoffen ist praktisch unbegrenzt und für das Wesen der Erfindung unkritisch. Üblicherweise liegt der Gesamtanteil aller Geschmacksstoffe bei 0.1 bis 15 und vorzugsweise 0.2 bis 5 Gew.-% bezogen auf die Kaugummizusammensetzung. Geeignete weitere Geschmacksstoffe stellen beispielsweise essentielle Öle, synthetische Aromen und dergleichen dar, wie etwa Anisöl, Sternanisöl, Kümmelöl, Eukalyptusöl, Fenchelöl, Citronenöl, Wintergrünöl, Nelkenöl, und dergleichen, wie sie auch beispielsweise in Mund- und Zahnpflegemittel Verwendung finden.

Die Kaugummis können des weiteren Hilfs- und Zusatzstoffe enthalten, die beispielsweise für die Zahnpflege, speziell zur Bekämpfung von Plaque und Gingivitis geeignet sind, wie z.B. Chlorhexidin, CPC oder Trichlosan. Weiter können pH-Regulatoren (z.B. Puffer oder Harnstoff), Wirkstoffe gegen Karies (z.B. Phosphate oder Fluoride), biogene Wirkstoffe (Antikörper, Enzyme, Koffein, Pflanzenextrakte) enthalten sein, solange diese Stoffe für Nahrungsmittel zugelassen sind und nicht in unerwünschter Weise miteinander in Wechselwirkung treten.

Sofern die oral anwendbaren Produkte pharmazeutische Mittel darstellen, umfassen diese einen pharmazeutischen Wirkstoff. Vorteilhafte pharmazeutische Wirkstoffe sind beispielsweise steroidale entzündungshemmende Substanzen vom Kortikosteroiden-Typ wie beispielsweise Hydrocortison, Hydrocortison-Derivate wie Hydrocortison-17-butyrat, Dexamethason, Dexamethasonphosphat, Methylprednisolon oder Cortison.

Vorteilhafte nichtsteroidale pharmazeutische Wirkstoffe sind beispielsweise Entzündungshemmer wie Oxicame wie Piroxicam oder Tenoxicam; Salicylate wie Aspirin® (Acetylsalicylsäure), Disalcid, Solprin oder Fendosal; Essigsäure-Derivate wie Diclofenac, Fenclofenac, Indomethacin, Sulindac, Tolmetin, oder Clindanac; Fenamate wie Mefenamic, Meclofenamic, Flufenamic oder Niflumic; Propionsäure-Derivate wie Ibuprofen, Naproxen, Flurbiprofen, Benoxaprofen oder Pyrazole wie Phenylbutazon, Oxyphenylbutazon, Febrazon oder Azapropazon.

Besonders bevorzugte pharmazeutische Zubereitungen sind nicht verschreibungspflichtige Produkte und frei verkäufliche Arzneimittel, sogenannte OTC ("over the counter") - Präparate, enthaltend Wirkstoffe wie Paracetamol, Acetylsalicylsäure oder Ibuprofen, Vitamine (beispielsweise Vitamin H, Vitamine aus der B-Reihe wie Vitamin B1, B2, B6, B12, Niacin, Panthotensäure, vorzugsweise in Form von (Brause)Tabletten oder Kapseln), Mineralien (vorzugsweise in Form von (Brause)Tabletten oder Kapseln) wie Eisensalze, Zinksalze, Selensalze, Produkte enthaltend Wirkstoffe oder Extrakte von Spitzwegerich (beispielsweise in Hustensirup) oder Johanniskraut.

Die oral anwendbaren Produkte können auch in Emulsionen, in Liposomen, beispielsweise ausgehend von Phosphatidylcholin, in Microsphären, in Nanosphären und insbesondere auch in Kapseln, Granulaten oder Extrudaten

aus einer für Lebens- und Genussmittel geeigneten Matrix, beispielsweise aus Stärke, Stärkederivaten, Cellulose oder Cellulosederivaten (beispielsweise Hydroxypropylcellulose) eingearbeitet werden.

Insbesondere können die erfindungsgemäßen Mischungen mit einem oder mehreren geeigneten Komplexbildnern, beispielsweise mit Cycloglycanen, beispielsweise Cyclofructanen, Cyclodextrinen oder Cyclodextrinderivaten, bevorzugt alpha-, gamma- und beta-Cyclodextrin, komplexiert und in dieser komplexierten Form als konfektioniertes Endprodukt, d.h. als oral anwendbares Produkt eingesetzt werden. Besonders bevorzugt ist eine erfindungsgemäßes oral anwendbares, besonders bevorzugt süß schmeckendes Produkt, bei dem die Matrix so gewählt wird, dass die erfindungsgemäße Mischung verzögert von der Matrix freigegeben wird, so dass man eine langanhaltende Wirkung erhält.

Neben üblichen Makrokapseln auf Basis von Gelatine kommen dabei vor allem auch so genannte Mikro- oder Nanokapseln in Betracht. Darunter werden vom Fachmann sphärische Aggregate mit einem Durchmesser im Bereich von etwa 0.0001 bis etwa 5 und vorzugsweise 0.005 bis 0.5 mm verstanden, die mindestens einen festen oder flüssigen Kern enthalten, der von mindestens einer kontinuierlichen Hülle umschlossen ist. Genauer gesagt handelt es sich um mit filmbildenden Polymeren umhüllte feindisperse flüssige oder feste Phasen, bei deren Herstellung sich die Polymere nach Emulgierung und Koazervation oder Grenzflächenpolymerisation auf dem einzuhüllenden Material niederschlagen. Nach einem anderen Verfahren werden geschmolzene Wachse in einer Matrix aufgenommen ("microsponge"), die als Mikropartikel zusätzlich mit filmbildenden Polymeren umhüllt sein können. Nach einem dritten Verfahren werden Partikel abwechselnd mit Polyelektrolyten unterschiedlicher Ladung beschichtet ("layer-by-layer"-Verfahren). Die mikroskopisch kleinen Kapseln lassen sich wie Pulvertrocknen. Neben einkernigen Mikrokapseln sind auch mehrkernige Aggregate, auch Mikrosphären genannt, bekannt, die zwei oder mehr Kerne im kontinuierlichen Hüllmaterial verteilt enthalten. Ein- oder mehrkernige Mikrokapseln können zudem von einer zusätzlichen zweiten, dritten etc. Hülle umschlossen sein. Die Hülle kann aus natürlichen, halbsynthetischen oder synthetischen Materialien bestehen. Natürlich Hüllmaterialien sind beispielsweise Gummi Arabicum, Agar-Agar, Agarose, Maltodextrine, Alginsäure bzw. ihre Salze, z.B. Natrium- oder Calciumalginat, Fette und Fettsäuren, Cetylalkohol, Collagen, Chitosan, Lecithine, Gelatine, Albumin, Schellack, Polysaccharide, wie Stärke oder Dextran, Polypeptide, Proteinhydrolysate, Sucrose und Wachse. Halbsynthetische Hüllmaterialien sind unter anderem chemisch modifizierte Cellulosen, insbesondere Celluloseester und -ether, z.B. Celluloseacetat, Ethylcellulose, Hydroxypropylcellulose, Hydroxypropylmethylcellulose und Carboxymethylcellulose, sowie Stärkederivate, insbesondere Stärkeether und -ester. Synthetische Hüllmaterialien sind beispielsweise Polymere wie Polyacrylate, Polyamide, Polyvinylalkohol oder Polyvinylpyrrolidon. Beispiele für Mikrokapseln des Stands der Technik sind folgende Handelsprodukte (in Klammern angegeben ist jeweils das Hüllmaterial) : *Hallcrest Microcapsules* (Gelatine, Gummi Arabicum), *Coletica Thalaspheres* (maritimes Collagen), *Lipotec Millicapseln* (Alginsäure, Agar-Agar), *Induchem Unispheres* (Lactose, mikrokristalline Cellulose, Hydroxypropylmethylcellulose); *Unicerin* C30 (Lactose, mikrokristalline Cellulose, Hydroxypropylmethylcellulose), *Kobo Glycospheres* (modifizierte Stärke, Fettsäureester, Phospholipide), *Softspheres* (modifiziertes Agar-Agar) und *Kuhs Probiol Nanospheres* (Phospholipide) sowie *Primaspheres* und *Primasponges* (Chitosan, Alginate) und *Primasys* (Phospholipide). Besonders interessant für die Verkapselung von Zubereitungen für kosmetische Anwendungen sind Koazervate von kationischen Polymeren, insbesondere von Chitosan, mit anionisechen polymeren, speziell Alginaten. Entsprechende Verfahren sind beispielsweise in den Druckschriften WO 2001 001926, WO 2001 001927, WO 2001 001928 und WO 2001 001929 (Cognis) beschrieben.

Mikrokapseln enthalten die Wirkstoffe häufig in einer Gelphase gelöst oder dispergiert. Als Gelbildner werden vorzugsweise solche Stoffe in Betracht gezogen, welche die Eigenschaft zeigen in wässriger Lösung bei Temperaturen oberhalb von 40 °C Gele zu bilden. Typische Beispiele hierfür sind Heteropolysaccharide und Proteine. Als thermogelierende Heteropolysaccharide kommen vorzugsweise Agarosen in Frage, welche in Form des aus Rotalgen zu gewinnenden Agar-Agar auch zusammen mit bis zu 30 Gew.-% nicht-gelbildenden Agaropektinen vorliegen können. Hauptbestandteil der Agarosen sind lineare Polysaccharide aus D-Galaktose und 3,6-Anhydro-L-galaktose, die alternierend β-1,3- und β-1,4-glykosidisch verknüpft sind. Die Heteropolysaccharide besitzen vorzugsweise ein Molekulargewicht im Bereich von 110.000 bis 160.000 und sind sowohl farb- als auch geschmacklos. Als Alternativen kommen Pektine, Xanthane (auch Xanthan Gum) sowie deren Mischungen in Frage. Es sind weiterhin solche Typen bevorzugt, die noch in 1-Gew.-%iger wässriger Lösung Gele bilden, die nicht unterhalb von 80 °C schmelzen und sich bereits oberhalb von 40 °C wieder verfestigen. Aus der Gruppe der thermogelierenden Proteine seien exemplarisch die verschiedenen Gelatine-Typen genannt.

Geeignete kationische Polymere sind beispielsweise kationische Cellulosederivate, wie z.B. eine quaternierte Hydroxyethylcellulose, die unter der Bezeichnung Polymer JR 400® von Amerchol erhältlich ist, kationische Stärke, Copolymere von Diallylammoniumsalzen und Acrylamiden, quaternierte Vinylpyrrolidon/Vinylimidazol-Polymere, wie z.B. Luviquat® (BASF), Kondensationsprodukte von Polyglycolen und Aminen, quaternierte Kollagenpolypeptide, wie beispielsweise Lauryldimonium Hydroxypropyl Hydrolyzed Collagen (Lamequat®L/Grünau), quaternierte Weizenpolypeptide, Polyethylenimin, kationische Siliconpolymere, wie z.B. Amodimethicone, Copolymere der Adipinsäure und Dimethylaminohydroxypropyldiethylentriamin (Cartaretine®/Sandoz), Copolymere der Acrylsäure mit Dimethyldiallylammoniumchlorid (Merquat® 550/Chemviron), Polyaminopolyamide sowie deren vernetzte wasserlöslichen Polymere, kationische Chitinderivate wie beispielsweise quaterniertes Chitosan, gegebenenfalls mikrokristallin verteilt, Kondensationsprodukte aus Dihalogenalkylen, wie z.B. Dibrombutan mit Bisdialkylaminen, wie z.B. Bis-Dimethylamino-1,3-propan, kationischer Guar-Gum, wie z.B. Jaguar® CBS, Jaguar® C-17, Jaguar® C-16 der Firma Celanese, quaternierte Ammoniumsalz-Polymere, wie z.B. Mirapol® A-15, Mirapol® AD-1, Mirapol® AZ-1 der Firma Miranol. Vorzugsweise wird als Verkapselungsmaterial Chitosan eingesetzt. Chitosane stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten:

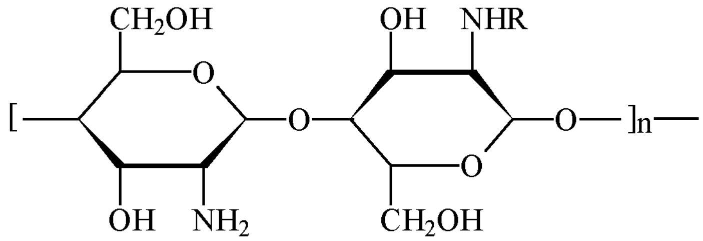

Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren, das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Vorzugsweise werden solche Typen eingesetzt, wie die ein durchschnittliches Molekulargewicht von 10.000 bis 500.000 bzw. 800.000 bis 1.200.000 Dalton aufweisen und/oder eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0.3 Gew.-% besitzen. Aus Gründen der besseren Wasserlöslichkeit werden die Chitosane in der Regel in Form ihrer Salze, vorzugsweise als Glycolate eingesetzt.

Die anionischen Polymere haben die Aufgabe, mit den kationischen Membranen zu bilden. Für diesen Zweck eignen sich vorzugsweise Salze der Alginsäure. Bei der Alginsäure handelt es sich um ein Gemisch carboxylgruppenhaltiger Polysaccharide mit folgendem idealisierten Monomerbaustein:

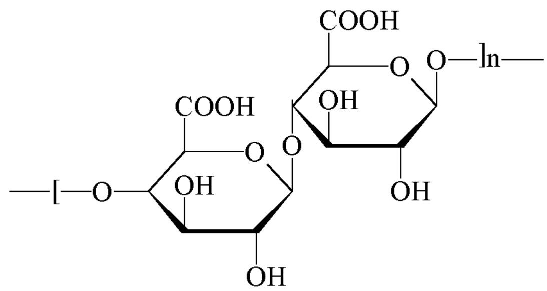

Das durchschnittliche Molekulargewicht der Alginsäuren bzw. der Alginate liegt im Bereich von 150.000 bis 250.000. Dabei sind als Salze der Alginsäure sowohl deren vollständige als auch deren partiellen Neutralisationsprodukte zu verstehen, insbesondere die Alkalisalze und hierunter vorzugsweise das Natriumalginat ("Algin") sowie die Ammonium- und Erdalkalisalze. besonders bevorzugt sind Mischalginate, wie z.B. Natrium/Magnesium- oder Natrium/Calciumalginate. In einer alternativen Ausführungsform der Erfindung kommen für diesen Zweck jedoch auch anionische Chitosanderivate, wie z.B. Carboxylierungs- und vor allem Succinylierungsprodukte in Frage. Alternativ kommen auch Poly(meth)acrylate mit durchschnittlichen Molekulargewichten im Bereich von 5.000 bis 50.000 Dalton sowie die verschiedenen Carboxymethylcellulosen in Frage. Anstelle der anionischen Polymeren können für die Ausbildung der Hüllmembran auch anionische Tenside oder niedermolekulare anorganische Salze, wie beispielsweise Pyrophosphate eingesetzt werden.

Zur Herstellung der Mikrokapseln stellt man üblicherweise eine 1 bis 10. vorzugsweise 2 bis 5 Gew.-%ige wässrige Lösung des Gelbildners, vorzugsweise des Agar-Agars her und erhitzt diese unter Rückfluss. In der Siedehitze, vorzugsweise bei 80 bis 100 °C, wird eine zweite wässrige Lösung zugegeben, welche das Kationpolymer, vorzugsweise

das Chitosan in Mengen von 0.1 bis 2, vorzugsweise 0.25 bis 0.5 Gew.-% und den Wirkstoffen in Mengen von 0.1 bis 25 und insbesondere 0.25 bis 10 Gew.-% enthält; diese Mischung wird als Matrix bezeichnet. Die Beladung der Mikrokapseln mit Wirkstoffen kann daher ebenfalls 0.1 bis 25 Gew.-% bezogen auf das Kapselgewicht betragen. Falls gewünscht, können zu diesem Zeitpunkt zur Viskositätseinstellung auch wasserunlösliche Bestandteile, beispielsweise anorganische Pigmente zugegeben werden, wobei man diese in der Regel in Form von wässrigen oder wässrig/alkoholischen Dispersionen zusetzt. Zur Emulgierung bzw. Dispergierung der Wirkstoffe kann es ferner von Nutzen sein, der Matrix Emulgatoren und/oder Lösungsvermittler hinzuzugeben. Nach der Herstellung der Matrix aus Gelbildner, Kationpolymer und Wirkstoffen kann die Matrix optional in einer Ölphase unter starker Scherung sehr fein dispergiert werden, um bei der nachfolgenden Verkapselung möglichst kleine Teilchen herzustellen. Dabei hat es sich als besonders vorteilhaft erwiesen, die Matrix auf Temperaturen im Bereich von 40 bis 60 °C zu erwärmen, während man die Ölphase auf 10 bis 20 °C kühlt. Im letzten, nun wieder obligatorischen Schritt erfolgt dann die eigentliche Verkapselung, d.h. die Ausbildung der Hüllmembran durch Inkontaktbringen des Kationpolymers in der Matrix mit den anionischen Polymeren. Hierzu empfiehlt es sich, die gegebenenfalls in der Ölphase dispergierte Matrix bei einer Temperatur im Bereich von 40 bis 100. vorzugsweise 50 bis 60 °C mit einer wässrigen, etwa 1 bis 50 und vorzugsweise 10 bis 15 Gew.-%ige wässrigen Lösung des Anionpolymers zu behandeln und dabei - falls erforderlich - gleichzeitig oder nachträglich die Ölphase zu entfernen. Die dabei resultierenden wässrigen Zubereitungen weisen in der Regel einen Mikrokapselgehalt im Bereich von 1 bis 10 Gew.-% auf. In manchen Fällen kann es dabei von Vorteil sein, wenn die Lösung der Polymeren weitere Inhaltsstoffe, beispielsweise Emulgatoren oder Konservierungsmittel enthält. Nach Filtration werden Mikrokapseln erhalten, welche im Mittel einen Durchmesser im Bereich von vorzugsweise etwa 0.01 bis 1 mm aufweisen. Es empfiehlt sich, die Kapseln zu sieben, um eine möglichst gleichmäßige Größenverteilung sicherzustellen. Die so erhaltenen Mikrokapseln können im herstellungsbedingten Rahmen eine beliebige Form aufweisen, sie sind jedoch bevorzugt näherungsweise kugelförmig. Alternativ kann man die Anionpolymere auch zur Herstellung der Matrix einsetzen und die Verkapselung mit den Kationpolymeren, speziell den Chitosanen durchführen.

Alternativ kann die Verkapselung auch unter ausschließlicher Verwendung von Kationpolymeren erfolgen, wobei man sich deren Eigenschaft zu Nutze macht, bei pH-Werten oberhalb des pKs-Wertes zu koagulieren.

In einem zweiten alternativen Verfahren wird zur Herstellung der erfindungsgemäßen Mikrokapseln wird zunächst eine O/W-Emulsion zubereitet, welche neben dem Ölkörper, Wasser und den Wirkstoffen eine wirksame Menge Emulgator enthält. Zur Herstellung der Matrix wird diese Zubereitung unter starkem Rühren mit einer entsprechenden Menge einer wässrigen Anionpolymerlösung versetzt. Die Membranbildung erfolgt durch Zugabe der Chitosanlösung. Der gesamte Vorgang findet vorzugsweise im schwach sauren Bereich bei pH = 3 bis 4 statt. Falls erforderlich erfolgt die pH-Einstellung durch Zugabe von Mineralsäure. Nach der Membranbildung wird der pH-Wert auf 5 bis 6 angehoben, beispielsweise durch Zugabe von Triethanolamin oder einer anderen Base. Hierbei kommt es zu einem Anstieg der Viskosität, die durch Zugabe von weiteren Verdickungsmitteln, wie z.B. Polysacchariden, insbesondere Xanthan-Gum, Guar-Guar, Agar-Agar, Alginaten und Tylosen, Carboxymethylcellulose und Hydroxyethylcellulose, höhermolekularen Polyethylenglycolmono- und -diestern von Fettsäuren, Polyacrylaten, Polyacrylamiden und dergleichen noch unterstützt werden kann. Abschließend werden die Mikrokapseln von der wässrigen Phase beispielsweise durch Dekantieren, Filtrieren oder Zentrifugieren abgetrennt.

In einem dritten alternativen Verfahren erfolgt die Bildung der Mikrokapseln um einen vorzugsweise festen, beispielsweise kristallinen Kern, indem dieser schichtweise mit entgegengesetzt geladenen Polyelektrolyten eingehüllt wird. In diesem Zusammenhang sei auf das Europäische Patent EP 1064088 B1 (Max-Planck Gesellschaft) verwiesen.

Die vorliegende Erfindung betrifft zudem ein Verfahren zur Herstellung einer Mischung enthaltend die Bestandteile i) und ii) sowie einen oder mehrere (weitere) Geruchs- oder Geschmacksstoffe oder eines oral anwendbaren Produktes wie oben beschrieben, umfassend die Schritte:

a) Bereitstellen einer Verbindung der Formel (I) oder einer Mischung aus zwei oder mehr Verbindungen der Formel (I) als Bestandteil i) wie oben definiert,

b) Bereitstellen einer oder einer Mischung aus zwei oder mehr Substanzen, die einen bitteren Geschmackseindruck hervorrufen, als Bestandteil ii) wie oben definiert, und

c) Einarbeiten der in Schritt a) und b) bereitgestellten Bestandteile i) und ii) in eine Mischung enthaltend die Bestandteile i) und ii) sowie einen oder mehrere (weitere) Geruchs- oder Geschmacksstoffe oder in ein oral anwendbares Produkt wie oben beschrieben.

Durch das Einarbeiten einer erfindungsgemäßen Bestandteile i) und ii) werden bittere Geschmackseindrücke der Substanz(en) des Bestandteils ii) unterdrückt bzw. vermindert. Das Verfahren wie oben beschrieben ist daher gleichzeitig ein Verfahren zum Maskieren oder Verringern von unangenehmen Geschmackseindrücken bei Produkten zur oralen Aufnahme.

Bevorzugt ist daher ein Verfahren wie oben beschrieben, wobei die Gesamtmenge der Substanz(en) des Bestandteils ii) ausreicht um in einer Vergleichszubereitung, die weder eine Verbindung der Formel (I) wie oben definiert, noch ein Salz einer Verbindung der Formel (I) wie oben definiert enthält, aber ansonsten identisch zusammengesetzt ist, als bitterer Geschmack oder Nachgeschmack wahrgenommen zu werden, und die Gesamtmenge an Verbindung(en) der Formel (I) wie oben definiert bzw. an Salzen der Verbindung(en) der Formel (I) wie oben definiert ausreicht, um im Vergleich mit der Vergleichszubereitung den bitteren Geschmackseindruck des bzw. der Substanz(en) des Bestandteils ii) zu vermindern oder zu maskieren.

Gemäß einer bevorzugten Ausführungsform wird bzw. werden in Schritt a) ein oder eine Mischung aus zwei oder mehr Isocumarin(en) der Formel (II)

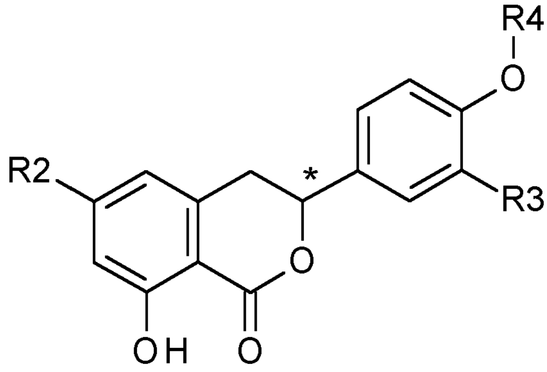

(II)

wobei

R2 ein Wasserstoffatom oder eine Hydroxylgruppe darstellt,
und
R3 ein Wasserstoffatom, eine Hydroxylgruppe oder eine Methoxygruppe darstellt, und
R4 ein Wasserstoffatom oder eine Methylgruppe darstellt,
und wobei eine oder mehrere der Hydroxylgrupp(en) glycosyliert, bevorzugt beta-D-glycosidiert sein kann bzw. können,
in einer Zusammensetzung enthaltend mindestens 5 Gew.-% Wasser, bevorzugt mindesten 10 Gew.-% Wasser, jeweils bezogen auf das Gesamtgewicht der Zusammensetzung, bei einem pH von größer als 3, bevorzugt größer als 4, besonders bevorzugt größer als 5 abgebaut und der bzw. die gegebenenfalls vorhandene(n) Gycosidrest(e) gleichzeitig oder nachfolgend enzymatisch oder durch schwach saure Hydrolyse abgespalten.

Die Verbindungen der Formel (I) werden *in situ* gebildet, wenn ein oder eine Mischung aus zwei oder mehr Isocumarin(en) der Formel (II) den oben genannten Bedingungen ausgesetzt werden. Vorteilhafterweise kann die Entstehung der Verbindungen der Formel (I) auch erfolgen, wenn die Isocumarine der Formel (II) bereits in eine Mischung oder ein Produkt eingearbeitet wurden und die Mischung bzw. das Produkt einer Reifung unterzogen wird.

Bevorzugt ist ein Verfahren wie oben beschrieben, wobei das bzw. die Mischung aus zwei oder mehr Isocumarin(en) der Formel (II) in Form eines Extraktes aus einer Pflanze eingesetzt wird bzw. werden, bevorzugt als Extrakt aus *Hydrangea dulcis.*

Vorteilhafterweise können die Ausgangsstoffe, insbesondere die Isocumarine der Formel (II) als natürliche Extrakte bereitgestellt und für die Herstellung einer erfindungsgemäßen Mischung bzw. eines erfindungsgemäßen Produktes eingesetzt werden.

Die Erfindung betrifft auch eine Mischung bzw. ein Produkt, welche(s) durch ein Verfahren wie oben beschrieben hergestellt wurde. Bevorzugt liegt in einer solchen Mischung bzw. in einem solchen Produkt Phyllodulcin neben den Verbindungen der Formel (I) vor. Dies ist insbesondere der Fall, wenn ein Extrakt aus *Hydrangea dulcis* eingesetzt wird.

Offenbart ist auch ein Verfahren zum Maskieren oder Verringern von unangenehmen Geschmackseindrücken bei Produkten zur oralen Aufnahme, bei dem man diesen eine wirksame Menge von mindestens einer der Verbindung(en) der Formel (I) zusetzt.

Für die eingesetzten Substanzen und Mengen gilt dabei das oben Gesagte entsprechend.

Die vorliegende Erfindung betrifft auch die Verwendung einer Verbindung der Formel (I) oder einer Mischung aus zwei oder mehr Verbindungen der Formel (I) wie oben definiert zum Maskieren oder Vermindern eines bitteren

Geschmackseindrucks.

Die Verbindungen der Formel (I) können bittere Geschmackseindrücke verringern oder vollständig maskieren, ohne dabei selbst den gewünschten Geschmack einer Mischung oder eines Produkts zu beeinflussen. Die Verbindungen der Formel (I) erlauben es daher, Substanzen, insbesondere Wirk- und Geschmackstoffe, die einen unangenehmen Geschmack oder Nachgeschmack haben, in oral anwendbaren Mischungen und Produkten einzusetzen, ohne das der unangenehme Geschmack oder Nachgeschmack wahrgenommen wird. Insbesondere sind die Verbindungen der Formel (I) dazu geeignet bittere Geschmackseindrücke zu verringern oder zu maskieren. Für die eingesetzten Substanzen und Mengen gilt dabei das oben Gesagte entsprechend.

Schließlich betrifft die vorliegende Erfindung auch eine Verbindung der Formel (I) wie oben definiert, wobei A eine Einfachbindung und R1 eine Hydroxylgruppe darstellt ausgewählt aus den Verbindungen (2) und (3) wie oben definiert, oder ein physiologisch verträgliches Salz davon.

Diese Verbindungen sowie ihre hervorragende Eignung zum Verringern oder Maskieren von bitteren Geschmackseindrücken, sind bisher nicht beschrieben worden. Bei den erfindungsgemäßen Mischungen, Produkten, Verfahren und Verwendungen, sind daher die Verbindungen der Formel (I) wie oben definiert, wobei A eine Einfachbindung und R1 eine Hydroxylgruppe darstellt, bevorzugt ausgewählt aus den Verbindungen (1), (2) und (3), besonders bevorzugt.

Die vorliegende Erfindung wird anhand der folgenden Beispiele näher beschrieben.

**Beispiel 1: 2-Hydroxy-6-[2-hydroxy-2-(4-hydroxyphenyl)ethyl]benzoesäure (Verbindung (1))**

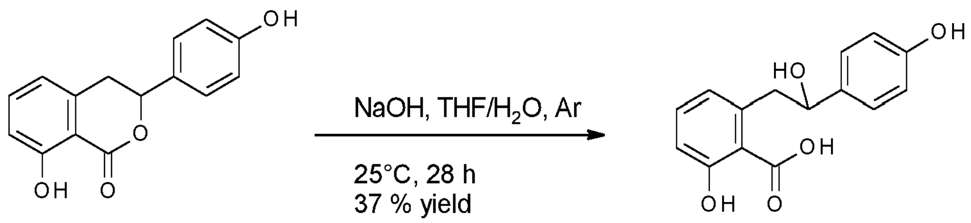


Hydrangenol

**(1)**

Eine Lösung aus Hydrangenol (1.00 g, 3.91 mmol) in THF (25.0 mL) ist mit einem Eis-Bad für 20 min gekühlt worden. Dann ist eine Lösung aus NaOH (625 mg, 15.6 mmol) in $H_2O$ (4.00 mL) tropfenweise zugegeben worden und die Mischung bei 25°C unter Argon 28 h gerührt worden. Quantitative HPLC-UV Analyse zur Reaktionsverfolgung hat gezeigt, dass das Startmaterial sich hauptsächlich in das Zielmolekül umgewandelt hat (87 Signalflächen-% bei 210 nm). Die Reaktionslösung ist mit einem Eis-Bad für 20 min gekühlt worden und dann sind 10% HCl tropfenweise unter Rühren zugegeben worden, um einen pH von 4-5 einzustellen. 70.0 mL Toluol sind hinzugegeben worden worauf schließlich ein Feststoff ausgefallen ist. Dann ist der Feststoff von der übrigen Lösung abgefiltert und gesammelt worden. Schließlich ist der Festtoff noch mit 200 ml Toluol gewaschen worden und im Vakuum getrocknet worden. 400 mg reine Verbindung (1) (37% Ausbeute) ist als farbloses, kristallines Pulver erhalten worden und durch die Analytik HPLC-UV, $^{1}$H-NMR, $^{13}$C-NMR, ESI-MS, Chirale HPLC-UV, Spezifische Optische Rotation und Karl Fischer Titration in seiner Struktur und Integrität bestätigt worden.

**$^{1}$H NMR (400 MHz, $CD_3OD$):** $\delta$ (ppm) = 7.19 (dd, *J* = 8.3, 7.5 Hz, 1H), 7.15 - 7.09 (m, 2H), 6.76 (dd, *J* = 8.2, 1.2 Hz, 1H), 6.73 - 6.67 (m, 2H), 6.61 (dd, *J* = 7.7, 1.2 Hz, 1H), 4.80 (dd, *J* = 8.1, 5.2 Hz, 1H), 3.30 (dd, 1H), 3.20 (dd, *J* = 13.0, 8.1 Hz, 1H). **$^{13}$C NMR (125 MHz, $CD_3OD$):** $\delta$ (ppm) = 174.7, 162.9, 158.1, 142.9, 137.6, 134.4, 128.7, 125.3, 116.9, 116.4, 116.3, 76.4, 47.0. $[\alpha]_D^{20}$ = 1.91° (c = 0.210, Methanol)

**Beispiel 2: 2-Hydroxy-6-[2-hydroxy-2-(4-hydroxy-3-methoxyphenyl)ethyl]benzoesäure (Verbindung (3))**

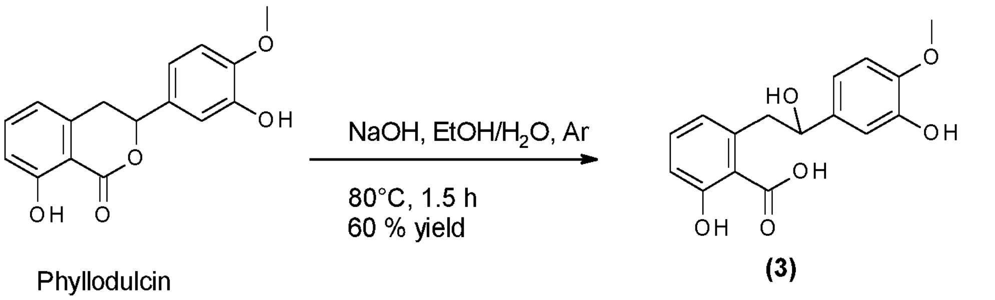


Phyllodulcin (3)

Eine Lösung von NaOH (832 mg, 20.8 mmol) in Wasser (30.0 mL) wird zu einer Phyllodulcin-Lösung (1.50 g, 5.24 mmol) in EtOH (30.0 mL) gegeben. Die Mischung wird bei 80°C unter Rückfluß und Argon über 1.5 h erhitzt. Quantitative HPLC-UV Reaktionsverfolgung zeigt die quantitative Umsetzung des Startmaterials (97 Signalflächen-% bei 210 nm). Die Reaktionslösung wird im Vakuum bis zur Trockene bei 40°C aufkonzentriert und anschließend in $H_2O$ (20.0 mL) wieder aufgenommen. Die Lösung wird für 10 min im Eisbad abgekühlt und dann durch tropfenweise Zuführung von 10% HCl ein pH-Wert von 3-4 eingestellt. Der Feststoff wird durch Filtration erhalten und mit $H_2O$ (500 mL) gewaschen. Dann wird dieser Feststoff in Ethylacetat (100 mL) gelöst und mit $H_2O$ (100 mL * 3) extrahiert. Die organische Phase wird mit $Na_2SO_4$ über 4 h getrocknet, dann filtriert und im Vakuum bei 40°C eingedampft. Quantitative HPLC-UV hat 85% der Signalfläche der Zielstruktur zugeordnet; 15% der Signalfläche sind Phyllodulcin (210 nm). Das Rohmaterial wird mit $CH_2Cl_2$ (300 mL) gewaschen. Reine Verbindung (3) (1.10 g, 60% Ausbeute) wurden als hellgelbes, kristallines Pulver erhalten und die Integrität durch die Analytik bestätigt: HPLC-UV, $^1$H-NMR, $^{13}$C-NMR, HR-ESI-MS, Chirale HPLC-UV, Spezifische optische Rotation, Karl Fischer-Titration.

**$^1$H NMR (400 MHz, DMSO-d$_6$):** δ (ppm) = 13.14 (s, 1H), 10.21 (s, 1H), 8.79 (s, 1H), 7.08 (t, *J* = 7.9 Hz, 1H), 6.79 (d, *J* = 8.2 Hz, 1H), 6.75 (d, *J* = 2.0 Hz, 1H), 6.69 (d, *J* = 8.2 Hz, 1H), 6.66 - 6.56 (m, 2H), 5.05 (s, 1H), 4.58 (dd, *J* = 8.5, 4.4 Hz, 1H), 3.71 (s, 3H), 2.87 (dd, *J* = 13.4, 4.4 Hz, 1H), 2.78 (dd, *J* = 13.5, 8.6 Hz, 1H).

**$^{13}$C NMR (125 MHz, DMSO-d$_6$):** δ (ppm) = 171.0, 156.3, 146.8, 146.5, 139.4, 138.9, 130.6, 122.3, 121.1, 116.7, 114.2, 113.7, 112.2, 73.1, 56.1, 44.6. $[\alpha]_D^{20}$ = -44.7° (c = 0.228, Methanol)

**Beispiel 3: 2-Hydroxy-6-[(E)-2-(4-hydroxyphenyl)vinyl]benzoesäure (Hydrangeasäure, Verbindung (4)) ohne Isolierung des Zwischenprodukts**

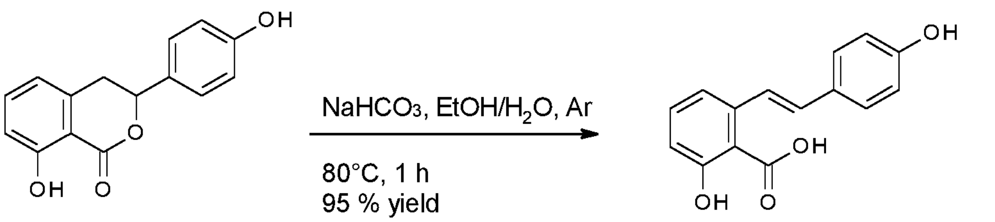


Hydrangenol (4)

Eine Hydrangenol-Lösung (1.55 g, 6.05 mmol) in EtOH (70.0 mL) wird mit einem Eis-Bad über 20 min gekühlt. Dann wird eine Lösung aus NaHCOs (2.03 g, 24.2 mmol) in $H_2O$ (70.0 mL) tropfenweise hinzugegeben und die Mischung bei 80°C unter Argon für 1 h gerührt. Unter der Reaktionsverfolgung mit quantitativer HPLC-UV Analyse wird die Reaktion bis zur vollständigen Umsetzung zur Zielsubstanz weitergeführt (-90 Signalflächen-% bei 210 nm). Die Reaktionslösung wird im Vakuum auf halbes Volumen reduziert und dann mit einem Eisbad über 20 min abgekühlt. 10% HCl-Lösung wird tropfenweise unter Rühren hinzugegeben und ein pH von 4-5 eigestellt. Der ausgefallene Feststoff wird abfiltriert und mit Wasser (500 mL) und Toluol (200 mL) gewaschen. Reine Verbindung (4) wurde als leicht gelbliches kristallines Pulver erhalten (1.50 g, 95% Ausbeute). Die Struktur und Integrität konnte mit HPLC-UV, $^1$H-NMR, $^{13}$C-NMR, HR-ESI-MS, Karl Fischer Titration bestätigt werden. **$^1$H NMR (500 MHz, $CD_3OD$):** δ (ppm) = 7.57 (d, *J* = 16.1 Hz, 1H), 7.39 - 7.32 (m, 3H), 7.16 (dt, *J* = 7.8, 0.8 Hz, 1H), 6.90 (d, *J* = 16.1 Hz, 1H), 6.82 (dd, *J* = 8.2, 1.1 Hz, 1H), 6.81 - 6.77 (m, 2H).

**$^{13}$C NMR (125 MHz, $CD_3OD$):** δ (ppm) = 174.5, 162.3, 159.1, 142.4, 134.6, 132.4, 131.1, 129.5, 127.2, 119.6,

117.0, 117.0, 115.5.

**Beispiel 4: 2-Hydroxy-6-[(E)-2-(3-hydroxy-4-methoxyphenyl)vinyl]benzoesäure (Verbindung 6) mit Isolierung des Zwischenprodukts**

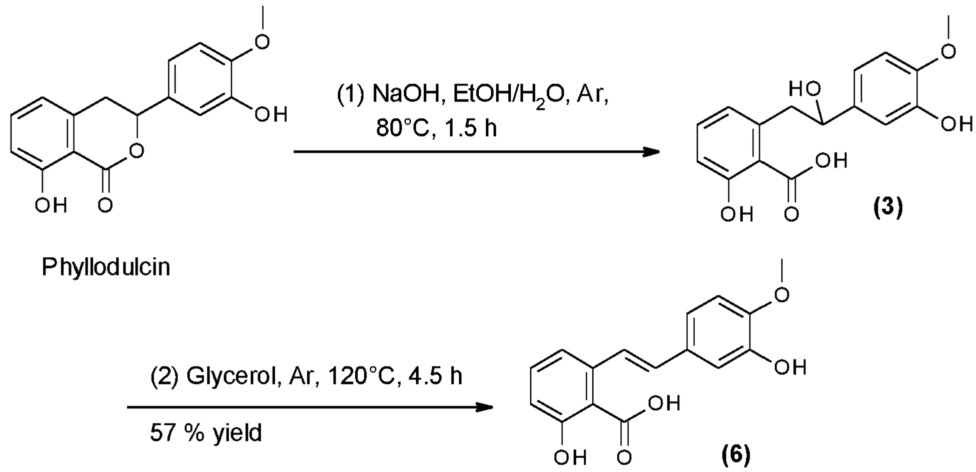


Phyllodulcin

(3)

(6)

Eine Lösung aus NaOH (1.13 g, 25.8 mmol) in $H_2O$ (35.0 mL) wird zu einer Lösung von Phyllodulcin (2.02 g, 7.0 mmol) in EtOH (35.0 mL) gegeben. Die Mischung wird bei 80°C unter Rückfluß und Argon über 1.5 h erhitzt. Quantitative HPLC-UV Analyse zeigt, dass das Ausgangsmaterial quantitativ in Verbindung (3) umgewandelt wird (98 Signalflächen-% bei 210 nm). Im Vakuum wird die Reaktionslösung bis zur Trockene bei 40°C aufkonzentriert. Glycerol (70 mL) wird zu der so erhaltenen Verbindung (3) hinzugefügt und die Mischung bei 120°C über 4.5 h gerührt. Quantitative HPLC-UV Analyse zeigt, dass Verbindung (3) hauptsächlich in die Verbindung (6) umgewandelt wird. Die Reaktionslösung wird im Eisbad abgekühlt (30 min) und dann Wasser (100 mL) zugegeben. Mit tropfenweise unter Rühren zugefügter 10% HCl-Lösung wird ein pH von 3-4 eingestellt. Der Rückstand wird durch Filtration abgetrennt und mit $H_2O$ (500 mL) gewaschen. Reine Verbindung (6) (1.15 g, 57% Ausbeute) wurde nach dem Trocknen als leicht gelbes kristallines Pulver erhalten. Die Analytik (HPLC-UV, $^1$H-NMR, $^{13}$C-NMR, HR-ESI-MS, Karl Fischer Titration) bestätigte die Integrität des Materials.

**$^1$H NMR (500 MHz, $CD_3OD$):** $\delta$ (ppm) = 7.57 (d, *J* = 16.1 Hz, 1H), 7.35 (t, *J* = 8.0 Hz, 1H), 7.15 (d, *J* = 7.6 Hz, 1H), 7.03 (d, *J* = 2.0 Hz, 1H), 6.95 (dd, *J* = 8.3, 2.1 Hz, 1H), 6.90 (d, *J* = 8.3 Hz, 1H), 6.85 (d, *J* = 14.6 Hz, 1H), 6.82 (d, *J* = 1.1 Hz, 1H), 3.87 (s, 3H).
**$^{13}$C NMR (125 MHz, $CD_3OD$):** $\delta$ (ppm) = 174.5, 162.3, 149.7, 148.2, 142.2, 134.7, 132.9, 132.3, 128.0, 120.8, 119.7, 117.1, 115.5, 114.2, 113.1, 56.9.

**Anwendungsbeispiel 1:**

Um die Reduzierung (d.h. die Maskierung oder Verminderung) des Bitter-Eindrucks in einer Probe zu quantifizieren, wurde die Bitterkeit einer Lösung enthaltend 500 ppm Coffein oder 300 ppm Theobromin oder 100 ppm Naringin von einer Expertengruppe jeweils mit einer Probe verglichen, die 500 ppm Coffein oder 300 ppm Theobromin oder 100 ppm Naringin und zusätzlich die jeweils angegebene Menge einer (hinsichtlich der Fähigkeit zur Bitter-Reduzierung) zu beurteilenden Substanz enthielt (Einstufung: 0 [nicht bitter] bis 100 [extrem bitter]). Für die Auswertung, d.h. die Berechnung der Reduktion (in %) des Bittereindrucks wurden jeweils die Durchschnittswerte der Einschätzungen der Expertengruppe verwendet. Die Ergebnisse sind in Tabelle 1 zusammengefasst:

**Tabelle 1:** Bitterreduzierung einer Bitterstofflösung

| **Test-Substanz** | **Bitterstoff** | **Bitter-Eindruck (1-10)** | | **% Reduktion des Bitter-Eindrucks (Signifikanz)** |
|---|---|---|---|---|
| | | ohne Test-substanz | mit Testsubstanz | |
| 10 ppm Substanz (3) aus Beispiel 2 | 500 ppm Coffein | 47.99 ± 18.02 | 41.25 + 21.83 | 14.0 % (p = 0.29) |
| 25 ppm Substanz (3) aus Beispiel 2 | 500 ppm Coffein | 52.85 ± 17.38 | 38.85 + 19.19 | 26.5 % (p < 0.05) |
| 25 ppm Substanz (3) aus Beispiel 2 | 300 ppm Theobromin | 47.62 ± 39.76 | 39.76 ± 20.91 | 16.5 % (p = 0.21) |
| 10 ppm Substanz (6) aus Beispiel 4 | 500 ppm Coffein | 45.90 ± 17.39 | 37.50 ± 18.84 | 18.3 % (p = 0.15) |

**Anwendungsbeispiel 2:**

In der folgenden Tabelle 2 sind verschiedene Formulierungen zur Maskierung eines Bittergeschmackes wiedergegeben.

**Tabelle 2:** Anwendungsformulierungen

| Inhaltsstoff | Mischung (Einsatz in Gew.-%) | | | | | | | | | | | | |
|---|---|---|---|---|---|---|---|---|---|---|---|---|---|
| | **A** | **B** | **C** | **D** | **E** | **F** | **G** | **H** | **I** | **J** | **K** | **L** | **M** |
| Substanz (3) aus Beispiel 2 | 5 | 7 | 10 | 15 | 15 | 20 | 20 | 25 | 10 | 10 | 10 | 10 | 10 |
| Homoeriodictyol | 5 | - | 2.5 | - | - | - | - | - | - | - | - | - | - |
| Eriodictyol | - | 2.5 | - | - | - | - | - | - | - | - | - | - | - |
| Phloretin | - | - | - | 1 | - | - | - | - | - | - | - | - | - |
| Hesperetin | - | - | - | - | 0.5 | - | - | - | - | - | - | - | - |
| Naringenin | - | - | - | - | - | - | - | - | 5 | - | - | - | - |
| 2,4-Dihydroxybenzoesäurevanillylamid | - | - | - | - | - | - | - | - | - | 2.5 | - | - | - |
| 3',7-Dihydroxy-4'-methoxyflavan | - | - | - | - | - | - | - | - | - | - | 2.5 | - | - |
| Matairesinol | - | - | - | - | - | - | - | - | - | - | - | 2.5 | - |
| 5,7-Dihydoxy-4-(4-hydroxy-phenyl)-chroman-2-on | - | - | - | - | - | - | - | - | - | - | - | - | 5 |
| 10 Gew.-% trans-Pellitorin (z.B. nach WO 2004/043906) in 1,2-Propylenglycol/ Diethylmalonat | - | - | - | 0.25 | 0.25 | 0.5 | 0.25 | - | - | - | - | - | - |
| Phyllodulcin, z.B. in Form des Extrakts aus *Hydrangea macrophylla* gemäß EP 2 298 084 A1 | 2.5 | - | 4.5 | - | - | - | - | 2.5 | - | - | 2.5 | - | 2.5 |
| Extrakt aus *Rubus suavissimus* enthaltend Rubusosid gemäß des europäischen Patents mit der EP 2,386,211-B1 | - | 2.5 | - | - | - | - | - | - | - | 2.5 | - | 2.5 | - |
| Enzymbehandelter Extrakt aus *Rubus suavissimus* enthaltend Rubusosid gemäß der europäischen Patentanmeldung mit der EP 2,954,785 | - | - | 1.5 | - | - | - | - | - | - | - | 2.5 | - | - |
| 1,2-Propylenglycol | - | 20 | - | ad 100 | ad 100 | 20 | ad 100 | - | - | - | - | - | ad 100 |
| Glycerin | - | ad 100 | - | 20 | 20 | ad 100 | 20 | - | - | - | - | - | - |

(fortgesetzt)

| Inhaltsstoff | Mischung (Einsatz in Gew.-%) | | | | | | | | | | | | |
|---|---|---|---|---|---|---|---|---|---|---|---|---|---|
| | A | B | C | D | E | F | G | H | I | J | K | L | M |
| Maltodextrin | ad 100 | - | ad 100 | - | - | - | - | ad 100 | ad 100 | ad 100 | ad 100 | ad 100 | - |

Die Stoffe bzw. Lösungen werden in den oben angegebenen Mengenverhältnissen gemischt und dann mit 1,2-Propylenglycol und/oder Glycerin aufgenommen und durch leichtes Erwärmen vollständig gelöst bzw. mit den festen Trägerstoffen homogen gemischt.

**Anwendungsbeispiel 3:**

In der folgenden Tabelle 3 sind verschiedene Formulierungen, enthaltend Süßstoffe und die Stilbencarbonsäurederivate wiedergegeben.

**Tabelle 3:** Anwendungsformulierungen mit Süßstoffen

| | Zubereitung (Einsatz in Gew.-%) | | | | | | | | | | |
|---|---|---|---|---|---|---|---|---|---|---|---|
| Inhaltsstoff | A | B | C | D | E | F | G | H | I | J | K |
| Rebaudiosid A | 99.4 | | | 94.7 | | 80.0 | | | | | |
| Rebaudiosid M | | 99.5 | | | 95.5 | | 70.1 | | | | |
| Rebaudiosid D | | | 100 | | | | | 70.0 | | | |
| Steviosidmischung analog zu Tabelle 1 und Tabelle 2 in der Anmeldung EP 2,868,209-A1 | | | | | | 10.0 | 20.0 | 20.0 | | | 70 |
| Neohesperidin-dihydrochalkon | 0.60 | | | 0.57 | | | 0.70 | | | | |
| Hesperetindihydrochalkon | | 0.50 | | | 0.50 | | | 0.50 | 80 | 20 | |
| Phyllodulcin | | | 0.50 | | | 0.50 | | 0.20 | | 70 | 10 |
| Homoeriod ictyol-Natriumsalz | | 15 | | 15 | | | 15 | | 10 | | 5 |
| Phloretin | | | | 3.79 | 3.18 | 3.20 | 4.67 | 4.67 | | | |
| Hesperetin | | | | 0.95 | 0.80 | 0.80 | 1.17 | 1.17 | | | |
| Substanz (3) aus Beispiel 2 | | | | 0.95 | 0.80 | 0.80 | 1.17 | 1.17 | 10 | 10 | 5 |

Die Stoffe bzw. Lösungen werden in den oben angegebenen Mengenverhältnissen gemischt und werden so verwendet.

**Anwendungsbeispiel 4:**

In der folgenden Tabelle 4 sind Beispiele für sprühgetrocknete Halbfertigware angegeben. Zur Herstellung wurde das Trinkwasser in einem Behälter vorgelegt und das Maltodextrin und das Gummi Arabicum darin gelöst. Anschließend wurde Verbindung (1) und/oder Verbindung (3) mit einem Turrax in die Trägerstofflösung emulgiert. Die Temperatur der Sprühlösung sollte dabei 30°C nicht überschreiten. Das Gemisch wurde dann sprühgetrocknet (Solltemperatur Eingang: 185 - 195°C, Solltemperatur Ausgang: 70 - 75°C). Die resultierende sprühgetrocknete Halbfertigware enthielt ca. 18 - 22 % der Verbindungen (1) und/oder (3).

**Tabelle 4:** Anwendungsformulierungen

| **Inhaltsstoff** | **Einsatz in Gew.-%** | | |
|---|---|---|---|
| | **A** | **B** | **C** |
| Trinkwasser | 60.8 | 60.8 | 60.8 |
| Maltodextrin aus Weizen | 24.3 | 24.3 | 24.3 |
| Gummi Arabicum | 6.1 | 6.1 | 6.1 |
| Substanz (3) aus Beispiel 2 | 8.8 | 4.4 | 6.6 |
| Substanz (1) aus Beispiel 1 | --- | 4.4 | 2.2 |

**Anwendungsbeispiel 5:**

In der folgenden Tabelle 5 sind verschiedene Tee-Zubereitungen angegeben. Zu ihrer Herstellung wurden der Tee und die Halbfertigware gemischt und in Teebeutel aus Filterpapier abgepackt (je 2 g pro Filterbeutel). Zur Anwendung wird ein Teebeutel in 100 - 250 ml kochendes Wasser aufgegossen und 2 - 5 min ziehen gelassen.

**Tabelle 5:** Anwendungsformulierungen

| **Inhaltsstoff** | **Einsatz in Gew.-%** | | |
|---|---|---|---|
| | **A** | **B** | **C** |
| Schwarzer Tee, Ceylon, Blattware | 94 | - | - |
| Grüner Tee, China, Blattware | - | 92 | - |
| Mate Tee, Peru, Blattware | - | - | 95 |
| Mischung A aus Anwendungsbeispiel 2 | 6 | - | - |
| Mischung B aus Anwendungsbeispiel 2 | - | 8 | - |
| Mischung C aus Anwendungsbeispiel 2 | - | - | 5 |

**Anwendungsbeispiel 6:**

In der folgenden Tabelle 6 ist eine Schwarztee-Zubereitung angegeben. Zu ihrer Herstellung wurden der Tee und die Halbfertigwaren gemischt und in Teebeutel aus Filterpapier abgepackt (je 2 g pro Filterbeutel). Zur Anwendung wird ein Teebeutel in 100 - 250 ml kochendes Wasser aufgegossen und 2 - 5 min ziehen gelassen.

**Tabelle 6:** Anwendungsformulierungen

| **Inhaltsstoff** | **Einsatz in Gew.-%** |
|---|---|
| Schwarzer Tee, Ceylon, Blattware | 94 |
| Mischung A aus Anwendungsbeispiel 2 | 3 |
| Mischung B aus Anwendungsbeispiel 2 | 3 |

**Anwendungsbeispiel 7:**

In der folgenden Tabelle 7 sind zwei Formulierungen für ein Eistee-Getränk (Schwarztee) angegeben. Die Verbindungen (1) und (2), bzw. (3) und (4) wurden jeweils 10 % in Ethanol vorgelöst. Schwarztee-Extrakt wurde in Wasser gelöst und zusammen mit Zucker, einer Aromazubereitung (Pfirsichgeschmack), sowie den ethanolischen Lösungen der Verbindungen (1) und (2) (Zubereitung A), bzw. (3) und (4) (Zubereitung B) in einem Becherglas verrührt.

**Tabelle 7:** Anwendungsformulierungen

| **Inhaltsstoff** | **Einsatz in Gew.-%** | | |
|---|---|---|---|
| | **A** | **B** | **C** |
| Schwarztee-Extrakt | 1.4 | 1.4 | 1.4 |
| Wasser | 89.5 | 89.5 | 89.5 |
| Aromazubereitung (Typ Pfirsich) | 0.67 | 0.67 | 0.67 |
| Zucker | 7 | 7 | 7 |
| Citronensäure (kristallin) | 1.2 | 1.2 | 1.2 |
| Ascorbinsäure | 0.2 | 0.2 | 0.2 |
| Verbindung (1) aus Beispiel 1 als 10%ige Lösung in Ethanol | 0.03 | - | 0.01 |
| Verbindung (3) aus Beispiel 2 als 10%ige Lösung in Ethanol | - | 0.03 | 0.02 |

**Anwendungsbeispiel 8:**

In der folgenden Tabelle 8 sind zwei weitere Formulierungen für ein Eistee-Getränk (Grüntee, zuckerreduziert) angegeben. Die Verbindungen (1) bzw. (3) wurden jeweils 10 % in Ethanol vorgelöst. Grüntee-Extrakt wurde in Wasser gelöst und zusammen mit Zucker, sowie dem Süßstoff Saccharin bzw. Rebaudiosid A, einer Aromazubereitung (Zitronengeschmack), sowie den ethanolischen Lösungen der Verbindungen (1) bzw. (3) (Zubereitung B) in einem Becherglas verrührt.

**Tabelle 8:** Anwendungsformulierungen

| **Inhaltsstoff** | **Einsatz in Gew.-%** | |
|---|---|---|
| | **A** | **B** |
| Grüntee-Extrakt | 1.4 | 1.4 |
| Wasser | 92.95 | 93.03 |
| Aromazubereitung (Typ Zitrone) | 0.65 | 0.65 |
| Zucker | 3.45 | 3.45 |
| Süßstoff Saccharin | 0.1 | --- |
| Süßstoff Rebaudiosid A | --- | 0.02 |
| Citronensäure (kristallin) | 1.2 | 1.2 |
| Ascorbinsäure | 0.2 | 0.2 |
| Verbindung (1) aus Beispiel 1 als 10%ige Lösung in Ethanol | 0.02 | --- |
| Verbindung (3) aus Beispiel 2 als 10%ige Lösung in Ethanol | 0.03 | 0.05 |

**Anwendungsbeispiel 9:**

In der folgenden Tabelle 9 sind zwei weitere Formulierungen für ein Eistee-Getränk (Schwarztee, zuckerfrei) angegeben. Die Verbindungen (1) bzw. (3) wurden jeweils in Ethanol vorgelöst. Schwarztee-Extrakt wurde in Wasser gelöst und zusammen mit dem Süßstoff Saccharin, einer Aromazubereitung (Zitronengeschmack), sowie den ethanolischen Lösungen der Verbindungen (1) (Zubereitung A) bzw. (3) (Zubereitung B) in einem Becherglas verrührt.

**Tabelle** 9: Anwendungsformulierungen

| **Inhaltsstoff** | **Einsatz in Gew.-%** | |
|---|---|---|
| | **A** | **B** |
| Schwarztee-Extrakt | 1.4 | 1.4 |
| Wasser | 96.465 | 96.465 |
| Saccharin | 0.035 | 0.035 |
| Aromazubereitung (Typ Zitrone) | 0.65 | 0.65 |
| Citronensäure (kristallin) | 1.2 | 1.2 |
| Ascorbinsäure | 0.2 | 0.2 |
| Verbindung (1) aus Beispiel 1 als 10%ige Lösung in Ethanol | 0.02 | - |
| Verbindung (3) aus Beispiel 2 als 10%ige Lösung in Ethanol | 0.03 | 0.05 |

**Anwendungsbeispiel 10: Softdrink Typ "Zitrone"**

**Tabelle 10:** Anwendungsformulierungen

| | Zubereitung (Einsatz in Gew.-%) | | | | | | | |
|---|---|---|---|---|---|---|---|---|
| Inhaltsstoff | A | B | C | D | E | F | G | H |
| Aromakomposition A aus Anwendungsbeispiel 3 | 0.05 | | | | | | | |
| Aromakomposition B aus Anwendungsbeispiel 3 | | 0.05 | | | | | | |
| Aromakomposition C aus Anwendungsbeispiel 3 | | | 0.05 | | | | | |
| Aromakomposition D aus Anwendungsbeispiel 3 | | | | 0.05 | | | | |
| Aromakomposition E aus Anwendungsbeispiel 3 | | | | | 0.05 | | | |
| Aromakomposition F aus Anwendungsbeispiel 3 | | | | | | 0.05 | | |
| Aromakomposition G aus Anwendungsbeispiel 3 | | | | | | | 0.05 | |
| Aromakomposition H aus Anwendungsbeispiel 3 | | | | | | | | 0.05 |
| Citronensäure | 0.15 | 0.15 | 0.15 | 0.15 | 0.15 | 0.15 | 0.15 | 0.15 |
| Aroma Typ "Zitrone" | 0.1 | 0.1 | 0.1 | 0.1 | 0.1 | 0.1 | 0.1 | 0.1 |
| Wasser | auf 100% auffüllen | | | | | | | |

Die Zutaten wurden in der angegebenen Reihenfolge gemischt, in Flaschen gefüllt und carbonisiert.

**Anwendungsbeispiel 11: Softdrink Typ "Cola"**

**Tabelle 11:** Anwendungsformulierungen

| | Zubereitung (Einsatz in Gew.-%) | | | | | | | |
|---|---|---|---|---|---|---|---|---|
| Inhaltsstoff | A | B | C | D | E | F | G | H |
| Aromakomposition A Anwendungsbeispiel 3 | 0.05 | | | | | | | |
| Aromakomposition B Anwendungsbeispiel 3 | | 0.05 | | | | | | |
| Aromakomposition C Anwendungsbeispiel 3 | | | 0.05 | | | | | |
| Aromakomposition D Anwendungsbeispiel 3 | | | | 0.05 | | | | |
| Aromakomposition E Anwendungsbeispiel 3 | | | | | 0.05 | | | |
| Aromakomposition F Anwendungsbeispiel 3 | | | | | | 0.05 | | |
| Aromakomposition G Anwendungsbeispiel 3 | | | | | | | 0.05 | |
| Aromakomposition H Anwendungsbeispiel 3 | | | | | | | | 0.05 |
| Phosphorsäure | 0.07 | 0.07 | 0.07 | 0.07 | 0.07 | 0.07 | 0.07 | 0.07 |
| Citronensäure | 0.06 | 0.06 | 0.06 | 0.06 | 0.06 | 0.06 | 0.06 | 0.06 |
| Zuckercouleur | 0.14 | 0.14 | 0.14 | 0.14 | 0.14 | 0.14 | 0.14 | 0.14 |
| Coffein | 0.01 | 0.01 | 0.01 | 0.01 | 0.01 | 0.01 | 0.01 | 0.01 |
| Getränke-Emulsion Typ "Cola" | 0.05 | 0.05 | 0.05 | 0.05 | 0.05 | 0.05 | 0.05 | 0.05 |
| Wasser | auf 100% auffüllen | | | | | | | |

Die Zutaten wurden in der angegebenen Reihenfolge gemischt, in Flaschen gefüllt und carbonisiert.

**Anwendungsbeispiel 12:**

In der folgenden Tabelle 12 sind Formulierungen für ein lösliches Cappuccino-Getränk angegeben. Die angegebenen Rohstoffe wurden vermischt. Jeweils 12,5 g des hergestellten Instant-Cappuccino-Pulvers wurden in 150 ml heißem Wasser gelöst.

**Tabelle 12:** Anwendungsformulierungen

| **Inhaltsstoff** | **Einsatz in Gew.-%** | | |
|---|---|---|---|
| | **A** | **B** | **C** |
| Kaffee-Extrakt, sprühgetrocknet | 18.0 | 18.0 | 16.0 |
| Zucker | 26.3 | 26.3 | 30.8 |
| Fettpulver | 18.2 | 18.2 | 18.2 |
| Kaffeeweißer, schäumend | 30.0 | 30.0 | 28,0 |
| Hydrokolloide/ Emulgatoren | 1.8 | 1.8 | 1.8 |
| Lactose | 4.7 | 4.7 | 4.7 |
| Mischung A aus Anwendungsbeispiel 2 | 1.0 | - | - |
| Mischung C aus Anwendungsbeispiel 2 | - | 1.0 | - |
| Halbfertigware C aus Anwendungsbeispiel 3 | - | - | 0.5 |

**Anwendungsbeispiel 13:**

In der folgenden Tabelle 13 sind Formulierungen für ein Soja-Getränk angegeben. Die Verbindungen (1) bzw. (3) wurden jeweils in Ethanol vorgelöst und zu einer Sojamilch aus einem lokalen Supermarkt hinzugefügt. Die Mischung wurde zusammen mit dem Milcharoma im Becherglas verrührt.

**Tabelle 13:** Anwendungsformulierungen

| **Inhaltsstoff** | **Einsatz in Gew.-%** | | | |
|---|---|---|---|---|
| | **A** | **B** | **C** | **D** |
| Sojamilch (nicht aromatisiert, ungesüßt) | 96.775 | 99.75 | 98.33 | 97.65 |
| Vanillearoma | 0.1 | 0.1 | - | 0.05 |
| Milcharoma | - | - | 0.1 | 0.05 |
| Saccharose | 3.0 | - | 1.5 | 2.0 |
| Sucralose | - | 0.025 | 0.01 | - |
| Na-Saccharin | - | - | 0.01 | - |
| Emulgum | 0.1 | 0.1 | - | 0.1 |
| Verbindung (1) aus Beispiel 1 als 10%ige Lösung in Ethanol | 0.010 | - | 0.02 | - |
| Verbindung (3) aus Beispiel 2 als 10%ige Lösung in Ethanol | 0.015 | 0.025 | 0.03 | 0.05 |
| Hesperetin, 5 %ig in Ethanol | - | - | - | 0.1 |

**Anwendungsbeispiel 14:**

In der folgenden Tabelle 14 ist eine Formulierung für ein Soja-Getränk in Kombination mit γ-Aminobuttersäure angegeben. Die γ-Aminobuttersäure wurde in Wasser und die Verbindungen (3) in Ethanol vorgelöst und zu einer Sojamilch aus einem lokalen Supermarkt hinzugefügt. Die resultierende Mischung wurde zusammen mit dem Milcharoma im Becherglas verrührt.

**Tabelle 14:** Anwendungsformulierungen

| **Inhaltsstoff** | **Einsatz in Gew.-%** |
|---|---|
| Sojamilch (aus lokalem Supermarkt) | 99.75 |

(fortgesetzt)

| Inhaltsstoff | Einsatz in Gew.-% |
|---|---|
| Milcharoma | 0.1 |
| Verbindung (3) aus Beispiel 2 als 10%ige Lösung in Ethanol | 0.05 |
| $\gamma$-Aminobuttersäure, 1%ig in Wasser | 0.1 |

**Anwendungsbeispiel 15:**

In der folgenden Tabelle 15 ist eine Formulierung für einen Grapefruitsaft angegeben. Die Verbindungen (3) wurden in Ethanol vorgelöst und zu einem Grapefruitsaft aus einem lokalen Supermarkt hinzugefügt. Die resultierende Mischung wurde in einem Becherglas durch Rühren homogenisiert.

**Tabelle 15:** Anwendungsformulierungen

| Inhaltsstoff | Einsatz in Gew.-% |
|---|---|
| Grapefruitsaft (aus lokalem Supermarkt) | 99.975 |
| Verbindung (3) aus Beispiel 2 als 10%ige Lösung in Ethanol | 0.025 |

**Anwendungsbeispiel 16:**

In der folgenden Tabelle 16 sind zwei Formulierungen für bittere Schokolade angegeben. Dazu wurde eine bittere Schokolade aus folgenden Rohstoffen hergestellt und anschließend in rechteckigen Formen ausgegossen:

**Tabelle 16:** Anwendungsformulierungen

| Inhaltsstoff | Einsatz in Gew.-% | |
|---|---|---|
| | A | B |
| Kakaomasse | Ad 100 | Ad 100 |
| Kakaobutter | 11.70 | 11.70 |
| Zucker | 29.50 | 29.50 |
| Magermilch | 3.00 | 3.00 |
| Lecithin | 0.2 | 0.2 |
| Vanillin | 0.035 | 0.035 |
| Verbindung (1) aus Beispiel 1 als 10%ige Lösung in 1,2-Propandiol | 0.02 | - |
| Verbindung (3) aus Beispiel 2 als 10%ige Lösung in 1,2-Propandiol | 0.03 | 0.025 |

**Anwendungsbeispiel 17:**

In der folgenden Tabelle 17 ist eine Formulierung für ein Kaugummi wiedergegeben. Die Teile A bis D wurden gemischt und intensiv geknetet. Die Rohmasse kann z.B. in Form von dünnen Streifen zu verzehrfertigen Kaugummis verarbeitet werden.

**Tabelle 17:** Anwendungsformulierungen

| Teil | Inhaltsstoff | Einsatz in Gew.-% |
|---|---|---|
| A | Kaugummibase, Company "Jagum T" | 30.00 |

(fortgesetzt)

| Teil | Inhaltsstoff | Einsatz in Gew.-% |
|---|---|---|
| B | Sorbit, pulverisiert | 39.00 |
| | Isomalt® (Palatinit GmbH) | 9.50 |
| | Xylit | 2.00 |
| | Mannit | 3.00 |
| | Aspartam® | 0.10 |
| | Acesulfam® K | 0.10 |
| | Emulgum® (Colloides Naturels, Inc.) | 0.30 |
| C | Sorbitol, 70%ig in Wasser | 14.00 |
| | Glycerin | 1.00 |
| D | Aroma, enthaltend 1 % der Verbindungen (3), bezogen auf das Gesamtgewicht des Aromas | 1.00 |

**Anwendungsbeispiel 18:**

In der folgenden Tabelle 18 ist eine Formulierung für ein Kaugummi wiedergegeben. Die Inhaltsstoffe der Teile A und B wurden jeweils für sich vorgemischt und zusammen unter Vakuum bei 25 - 30°C 30 min gut verrührt. Teil C wurde vorgemischt und zu A und B gegeben; D wurde hinzugefügt und die Mischung unter Vakuum bei 25 - 30°C für 30 min gut verrührt. Nach Entspannung war die Zahnpasta fertig und konnte abgefüllt werden.

**Tabelle 18:** Anwendungsformulierungen

| Teil | Inhaltsstoff | Einsatz in Gew.-% |
|---|---|---|
| A | demineralisiertes Wasser | 21.50 |
| | Sorbitol (70%) | 45.00 |
| | Solbrol® M, Natriumsalz (Bayer AG, p-Hydroxybenzoesäurealkylester) | 0.15 |
| | Trinatriumphosphat | 0.10 |
| | Saccharin, 450 fach | 0.20 |
| | Natriummonofluorphosphat | 1.12 |
| | Polyethylenglycol 1500 | 5.00 |
| B | Sident 9 (abrasives Siliciumdioxid) | 10.00 |
| | Sident 22 S (verdickendes Siliciumdioxid) | 8.00 |
| | Natriumcarboxymethylcellulose | 0.90 |
| | Titandioxid | 0.50 |
| C | demineralisiertes Wasser | 4.53 |
| | Natriumlaurylsulfat | 1.50 |
| D | Aroma, enthaltend 1 Gew.-% der Verbindung (3), bezogen auf das Gesamtgewicht des Aromas | 1.50 |

## Patentansprüche

**1.** Mischung umfassend

i) eine oder mehrere Verbindung(en) der Formel (I)

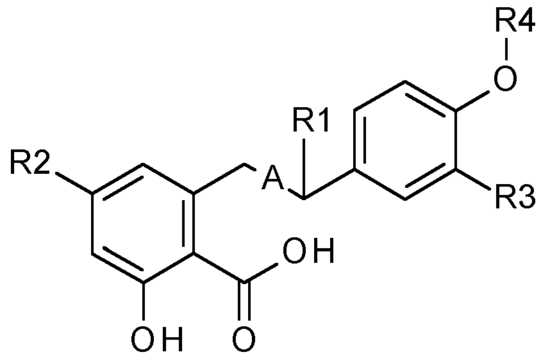

(I)

wobei

A eine Einfachbindung und R1 eine Hydroxylgruppe darstellt,
oder
A eine E oder Z-Doppelbindung und R1 ein Wasserstoffatom darstellt,
und wobei
R2 ein Wasserstoffatom oder eine Hydroxylgruppe darstellt,
und
R3 ein Wasserstoffatom, eine Hydroxylgruppe oder eine Methoxygruppe darstellt,
und
R4 ein Wasserstoffatom oder eine Methylgruppe darstellt,
und/oder ein oder mehrere physiologisch verträgliche Salze davon

und
ii) mindestens eine Substanz, die einen bitteren Geschmackseindruck hervorruft,

wobei die Gesamtmenge der Substanz(en) des Bestandteils ii) ausreicht um in einer Vergleichszubereitung, die weder eine Verbindung der Formel (I) wie oben definiert, noch ein Salz einer Verbindung der Formel (I) wie in oben definiert enthält, aber ansonsten identisch zusammengesetzt ist, als bitterer Geschmack oder Nachgeschmack wahrgenommen zu werden, und die Gesamtmenge an Verbindung(en) der Formel (I) wie oben definiert bzw. an Salzen der Verbindung(en) der Formel (I) wie oben definiert ausreicht, um im Vergleich mit der Vergleichszubereitung den bitteren Geschmackseindruck des bzw. der Substanz(en) des Bestandteils ii) zu vermindern oder zu maskieren.

**2.** Mischung nach Anspruch 1, wobei das Verhältnis der Gesamtmenge der Verbindung(en) der Formel (I) zu der Gesamtmenge der Substanz(en) des Bestandteils ii) zwischen 1:1 bis 1:500 liegt, bevorzugt zwischen 1:2 bis 1:250. besonders bevorzugt zwischen 1:5 bis 1:100.

**3.** Mischung nach einem der vorhergehenden Ansprüche, wobei die Verbindung(en) der Formel (I) ausgewählt ist bzw. sind aus der Gruppe bestehend aus

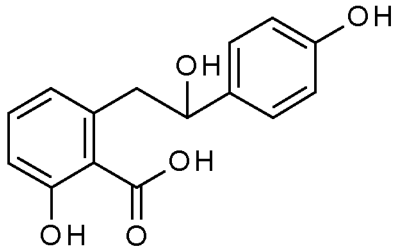

**(1)**

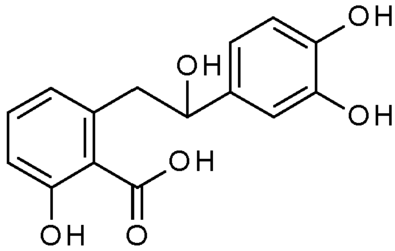

**(2)**

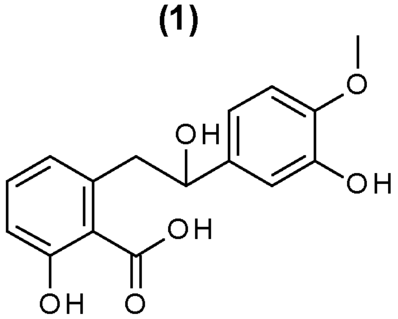

**(3)**

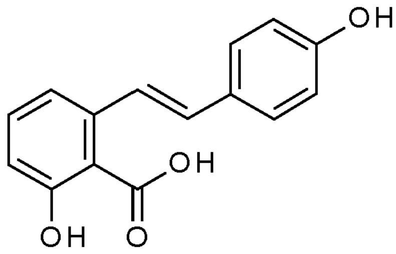

**(4)**

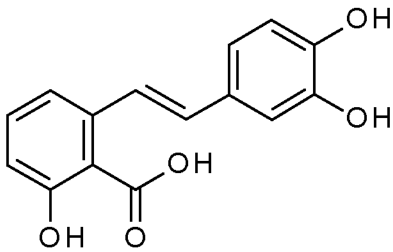

**(5)**

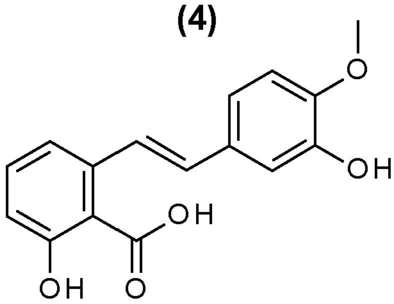

**(6)**

sowie deren physiologisch verträgliche Salze, bevorzugt ausgewählt aus den Verbindungen (1), (2) und (3).

4. Mischung nach einem der vorhergehenden Ansprüche, wobei die Substanz(en) des Bestandteils ii) ausgewählt ist bzw. sind aus Bitterstoffen und Süßstoffen, die einen bitteren Neben- oder Nachgeschmack haben.

5. Mischung nach Anspruch 4, wobei der bzw. die Bitterstoff(e) ausgewählt ist bzw. sind aus Catechinen, Proanthocyanidinen, Coffein, Theobromin und Naringin und/oder wobei der bzw. die Süßstoffe), die einen bitteren Neben- oder Nachgeschmack haben, ausgewählt ist bzw. sind aus Acesulfam K, Saccharin und seinen Salzen, Cyclamat und seinen Salzen, Advantam, Aspartam, Neotam, Sucralose, Steviosiden und Rebaudiosiden, insbesondere Rebaudiosid A, Rebaudiosid C, Rebaudiosid D, Rebaudiosid E, Rebaudiosid M, Rebaudiosid X, Rubusosid, Mogrosiden, insbesondere Mogrosid V.

6. Mischung nach einem der Ansprüche 1 bis 5, zusätzlich umfassend einen oder mehrere (weitere) Geruchs- und/oder Geschmacksstoffe.

7. Oral anwendbares Produkt, enthaltend eine Mischung nach einem der Ansprüche 1 bis 6, ausgewählt aus der Gruppe bestehend aus pharmazeutischen Zubereitungen, der Zahn- und Mundpflege dienenden Zubereitungen, Halbfertigwaren, flüssigen oder festen Nahrungs- oder Genussmitteln.

8. Oral anwendbares Produkt nach Anspruch 7, wobei das Produkt 0.0001 bis 1 Gew.-%, vorzugsweise 0.01 bis 0.5 Gew.-% der Mischung nach einem der Ansprüche 1 bis 5 enthält, jeweils bezogen auf das Gesamtgewicht des Produktes.

9. Verfahren zur Herstellung einer Mischung nach Anspruch 6 oder eines oral anwendbaren Produktes nach einem

der Ansprüche 7 oder 8, umfassend die Schritte:

a) Bereitstellen einer Verbindung der Formel (I) oder einer Mischung aus zwei oder mehr Verbindungen der Formel (I) als Bestandteil i) wie in Anspruch 1 oder 3 definiert,
b) Bereitstellen einer oder einer Mischung aus zwei oder mehr Substanzen, die einen bitteren Geschmackseindruck hervorrufen, als Bestandteil ii) wie in Anspruch 1, 4 oder 5 definiert, und
c) Einarbeiten der in Schritt a) und b) bereitgestellten Bestandteile i) und ii) in eine Mischung nach Anspruch 6 oder in ein oral anwendbares Produkt nach einem der Ansprüche 7 oder 8.

**10.** Verfahren nach Anspruch 9, wobei in Schritt a) ein oder eine Mischung aus zwei oder mehr Isocumarin(en) der Formel (II)

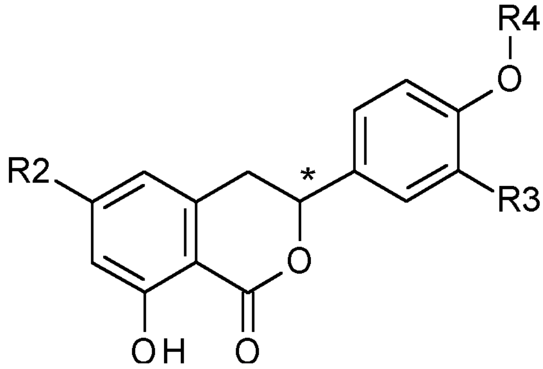

(II)

wobei

R2 ein Wasserstoffatom oder eine Hydroxylgruppe darstellt,
und
R3 ein Wasserstoffatom, eine Hydroxylgruppe oder eine Methoxygruppe darstellt,
und
R4 ein Wasserstoffatom oder eine Methylgruppe darstellt,
und wobei eine oder mehrere der Hydroxylgrupp(en) glycosyliert, bevorzugt beta-D-glycosidiert sein kann bzw. können,
in einer Zusammensetzung enthaltend mindestens 5 Gew.-% Wasser, bevorzugt mindesten 10 Gew.-% Wasser, jeweils bezogen auf das Gesamtgewicht der Zusammensetzung, bei einem pH von größer als 3, bevorzugt größer als 4, besonders bevorzugt größer als 5 abgebaut wird bzw. werden und der bzw. die gegebenenfalls vorhandene(n) Glycosidrest(e) gleichzeitig oder nachfolgend enzymatisch oder durch schwach saure Hydrolyse abgespalten wird bzw. werden.

**11.** Verfahren nach Anspruch 10, wobei das bzw. die Mischung aus zwei oder mehr Isocumarin(en) der Formel (II) in Form eines Extraktes aus einer Pflanze eingesetzt wird bzw. werden, bevorzugt als Extrakt aus *Hydrangea dulcis.*

**12.** Verwendung einer Verbindung der Formel (I) oder einer Mischung aus zwei oder mehr Verbindungen der Formel (I) wie in Anspruch 1 definiert zum Maskieren oder Vermindern eines bitteren Geschmackseindrucks.

**13.** Verbindung der Formel (I) wie in Anspruch 1 definiert, wobei A eine Einfachbindung und R1 eine Hydroxylgruppe darstellt, ausgewählt aus den Verbindungen (2) und (3),

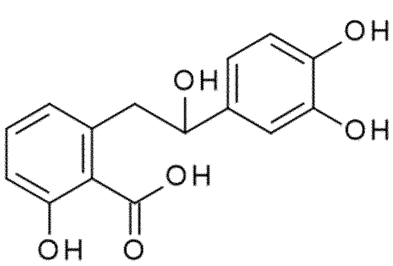
(2)

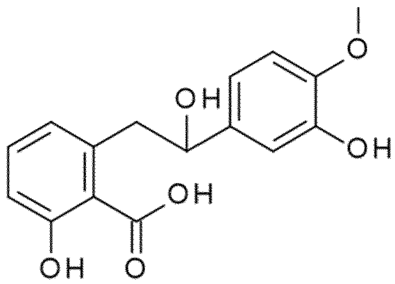
(3)

oder ein physiologisch verträgliches Salz davon.

## Claims

1. Mixture comprising

i) one or more compound(s) of formula (I)

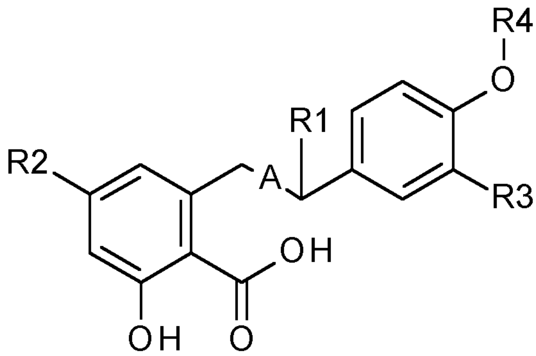

(I)

wherein

A is a single bond and R1 is hydroxy group,
or
A is an E or Z configured double bond and R1 is hydrogen,
and wherein
R2 is a hydrogen or a hydroxy group,
and
R3 is a hydrogen, a hydroxy group or a methoxy group,
and
R4 is a hydrogen or a methyl group,
and/or one or more physiologically acceptable salts thereof

and
ii) at least one substance, which causes a bitter taste impression,

wherein the total amount of the substance(s) of component ii) is sufficient to be perceived as a bitter taste or aftertaste in a comparative preparation, which does not comprise a compound of formula (I) as defined above or a salt of a compound of formula (I) as defined above, but is otherwise identically composed, and the total amount of compound(s)

of formula (I) as defined above or the salts of compound(s) of formula (I) as defined above is sufficient to reduce or mask the bitter taste expression of the compound(s) of component ii) compared to the comparative preparation.

2. Mixture according to claim 1, wherein the ratio of the total amount of compound(s) of formula (I) to the total amount of the substance(s) of component ii) is between 1:1 to 1:500, preferably between 1:2 to 1:250, particularly preferably between 1:5 to 1:100.

3. Mixture according to one of the previous claims, wherein the compound(s) of formula (I) is/are selected from the group consisting of

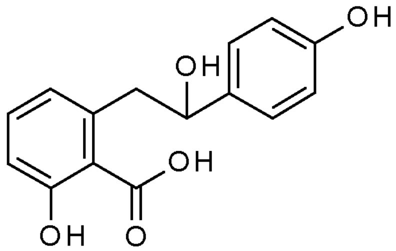

**(1)**

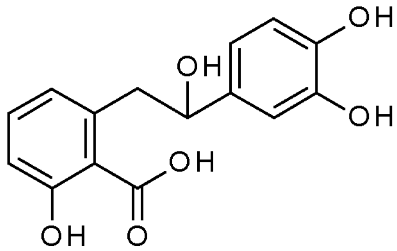

**(2)**

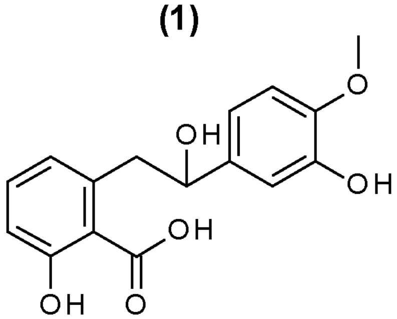

**(3)**

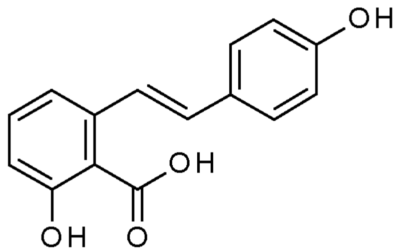

**(4)**

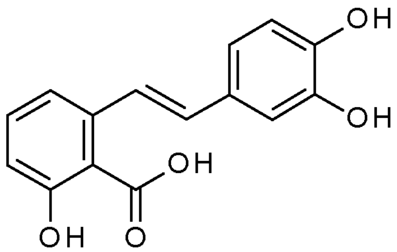

**(5)**

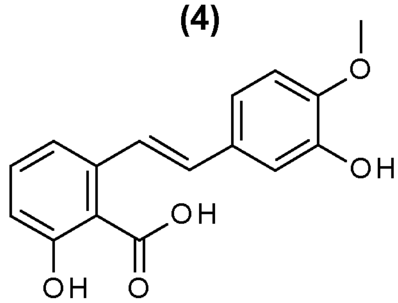

**(6)**

and physiologically acceptable salts thereof, preferably selected from the compounds (1), (2) and (3).

4. Mixture according to one of the previous claims, wherein the substance(s) of component ii) is/are selected from bitter tasting substances and sweeteners, which have a bitter sidetaste or aftertaste.

5. Mixture according to claim 4, wherein the bitter tasting substance(s) is/are selected from catechins, proanthocyanidins, caffeine, theobromine and naringin and/or wherein the sweetener(s), which have a bitter sidetaste or aftertaste is/are selected from acesulfame K, saccharin and its salts, cyclamate and its salts, advantame, aspartame, neotame, sucralose, steviosides and rebaudiosides, in particular rebaudioside A, rebaudioside C, rebaudioside D, rebaudioside E, rebaudioside M, rebaudioside X, rubusoside, mogrosides, in particular mogroside V.

6. Mixture according to one of claims 1 to 5, additionally comprising one or more (further) fragrance and/or flavor substance(s).

7. Orally applicable product, comprising a mixture according to one of claims 1 to 6, selected from the group consisting of pharmaceutical preparations, tooth or oral care preparations, semi-finished products, liquid or solid products for nutrition or pleasure.

8. Orally applicable product according to claim 7, wherein the product comprises 0.0001 to 1 wt.-%, preferably 0.01 to 0.5 wt.-% of the mixture according to one of claims 1 to 5, in each case with respect to the total weight of the product.

9. Method for preparing a mixture according to claim 6 or an orally applicable product according to one of claims 7 or 8, comprising the steps:

a) providing a compound of formula (I) or a mixture of two or more compounds of formula (I) as component i) as defined in claim 1 or 3,
b) providing one or a mixture of two or more substances, which cause a bitter taste impression, as component ii) as defined in claim 1, 4 or 5, and
c) incorporating the components i) and ii) provided in steps a) and b) into a mixture according to claim 6 or into an orally applicable product according to one of claims 7 or 8.

10. Method according to claim 9, wherein in step a) one or a mixture of two or more isocumarin(s) of formula (II)

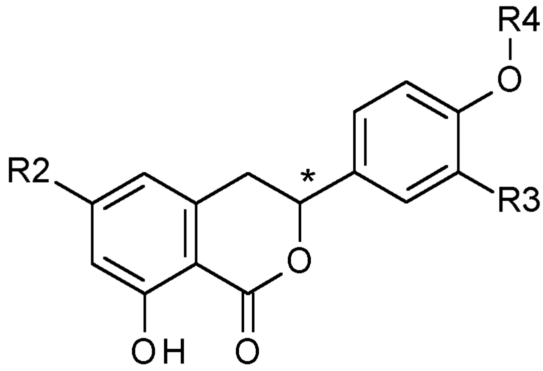

(II)

wherein

R2 is a hydrogen or a hydroxyl group,
and
R3 is hydrogen, a hydroxyl group or a methoxy group,
and
R4 is a hydrogen or a methyl group,
and wherein one or more of the hydroxyl group(s) may be glycosylated, preferably beta-D-glycosylated,
is/are decomposed in a composition comprising at least 5 wt.-% water, preferably at least 10 wt.-% water, in each case with respect to the total weight of the preparation, at a pH of lager than 3, preferably larger than 4, particularly preferably larger than 5 and the optionally present glycoside residue(s) is/are cleaved off simultaneously or subsequently, either enzymatically or by weakly acidic hydrolysis.

11. Method according to claim 10, wherein the or the mixture of two or more isocumarin(s) of formula (II) is/are used in form of an extract from a plant, preferably as an extract from *Hydrangea dulcis.*

12. Use of a compound of formula (I) or a mixture of two or more compound(s) of formula (I) as defined in claim 1 for masking or reducing a bitter taste impression.

13. Compound of formula (I) as defined in claim 1, wherein A is a single bond and R1 is a hydroxy group, selected from compounds (2) and (3),

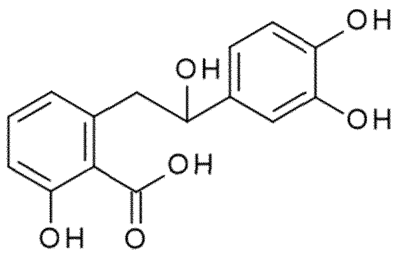

**(2)**

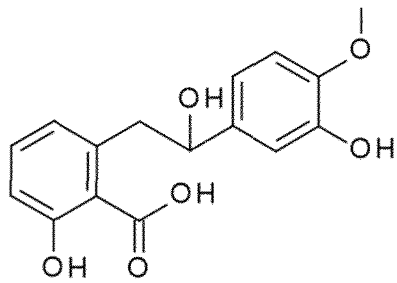

**(3)**

or a physiologically acceptable salt thereof.

**Revendications**

1. Mélange comprenant

i) un ou plusieurs composé(s) de formule (I)

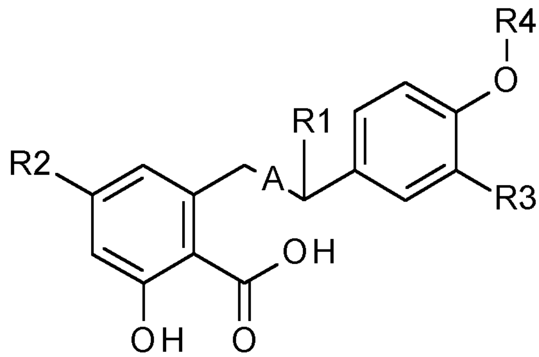

(I)

dans laquelle

A représente une liaison simple et R1 représente un groupe hydroxyle,
ou
A représente une double liaison E ou Z et R1 représente un atome d'hydrogène,
et dans laquelle
R2 représente un atome d'hydrogène ou un groupe hydroxyle,
et
R3 représente un atome d'hydrogène, un groupe hydroxyle ou un groupe méthoxy,
et
R4 représente un atome d'hydrogène ou un groupe méthyle,
et/ou un ou plusieurs sels physiologiquement acceptables de celui-ci/ceux-ci

et
ii) au moins une substance qui produit une impression de goût amer,

dans lequel la quantité totale de la ou des substance(s) du composant ii) est suffisante pour être perçue, dans une préparation de comparaison qui ne contient ni un composé de formule (I) tel que défini ci-dessus ni un sel d'un composé de formule (I) tel que défini ci-dessus, mais qui est par ailleurs identique dans sa composition, en tant que

goût ou arrière-goût amer, et la quantité totale de composé(s) de formule (I) tel(s) que défini(s) ci-dessus ou bien de sels du ou des composé(s) de formule (I) tel(s) que défini(s) ci-dessus est suffisante pour réduire ou masquer l'impression de goût amer de la ou des substance(s) du composant ii) par rapport à la préparation de comparaison.

2. Mélange selon la revendication 1, dans lequel le rapport de la quantité totale du ou des composé(s) de formule (I) sur la quantité totale de la ou des substance(s) du composant ii) est compris entre 1 : 1 et 1 : 500, de préférence entre 1 : 2 et 1 : 250, de manière particulièrement préférée entre 1 : 5 et 1 : 100.

3. Mélange selon l'une quelconque des revendications précédentes, dans lequel le(s) composé(s) de formule (I) est ou bien sont choisi(s) dans le groupe constitué de

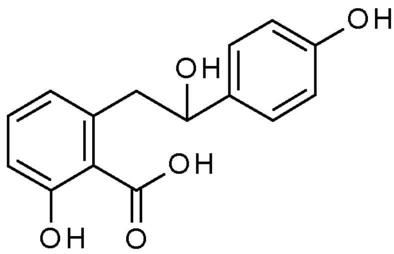

**(1)**

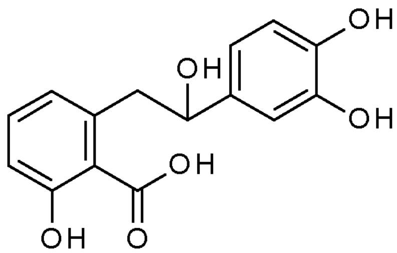

**(2)**

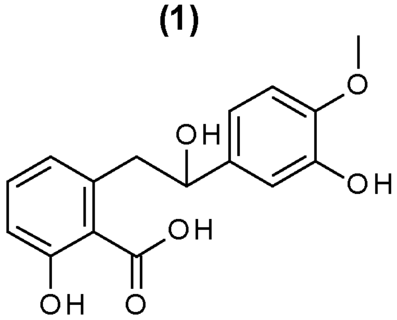

**(3)**

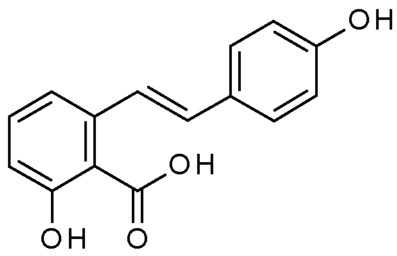

**(4)**

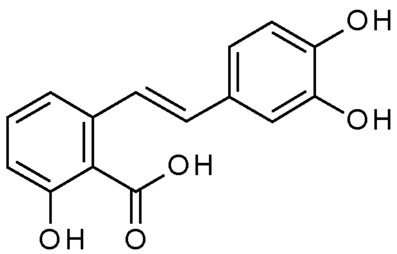

**(5)**

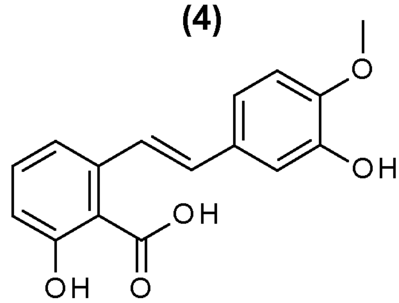

**(6)**

ainsi que leurs sels physiologiquement acceptables, de préférence choisis parmi les composés (1), (2) et (3).

4. Mélange selon l'une quelconque des revendications précédentes, dans lequel la ou les substance(s) du composant ii) est ou bien sont choisie(s) parmi les substances amères et les édulcorants qui présentent un faux-goût ou un arrière-goût amer.

5. Mélange selon la revendication 4, dans lequel la ou bien les substance(s) amère(s) est ou bien sont choisie(s) parmi les catéchines, les proanthocyanidines, la caféine, la théobromine et la naringine et/ou dans lequel le ou bien les édulcorant(s) qui ont un faux- ou arrière-goût amer est ou bien sont choisis parmi l'acésulfame K, la saccharine et ses sels, le cyclamate et ses sels, l'advantame, l'aspartame, le néotame, le sucralose, les stéviosides et les rébaudiosides, en particulier le rebaudioside A, le rebaudioside C, le rebaudioside D, le rebaudioside E, le rebaudioside M, le rebaudioside X, le rubusoside, les mogrosides, en particulier le mogroside V.

6. Mélange selon l'une quelconque des revendications 1 à 5, comprenant en outre un(e) ou plusieurs (autres) substance(s) odorante(s) et/ou agent(s) de sapidité.

7. Produit applicable par voie orale contenant un mélange selon l'une quelconque des revendications 1 à 6, choisi dans le groupe constitué par les préparations pharmaceutiques, les préparations servant aux soins dentaires et bucco-dentaires, les produits semi-finis, les aliments ou aliments-plaisir liquides ou solides.

8. Produit applicable par voie orale selon la revendication 7, dans lequel le produit contient entre 0,0001 et 1 % en poids, de préférence entre 0,01 et 0,5 % en poids, du mélange selon l'une quelconque des revendications 1 à 5, respectivement par rapport au poids total du produit.

9. Procédé de production d'un mélange selon la revendication 6 ou d'un produit applicable par voie orale selon l'une quelconque des revendications 7 ou 8, comprenant les étapes consistant à:

a) fournir un composé de formule (I) ou un mélange de deux ou plusieurs composés de formule (I) en tant que composant i) tel que défini dans la revendication 1 ou 3,
b) fournir une substance ou un mélange de deux ou plusieurs substances qui produisent une impression de goût amer, en tant que composant ii) tel que défini dans la revendication 1, 4 ou 5, et
c) incorporer les composants i) et ii) fournis à l'étape a) et b) dans un mélange selon la revendication 6 ou dans un produit applicable par voie orale selon l'une quelconque des revendications 7 ou 8.

10. Procédé selon la revendication 9, dans lequel à l'étape a) une isocoumarine ou un mélange de deux ou plusieurs isocoumarine(s) de formule (II)

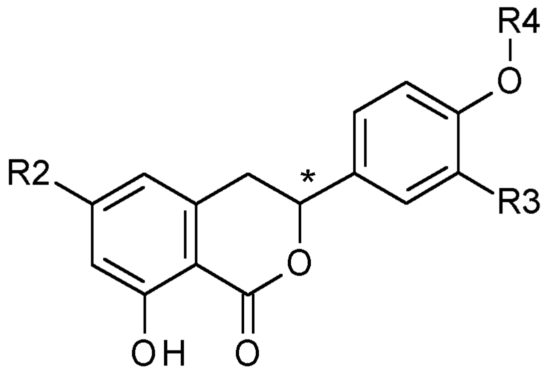

(II)

dans laquelle

R2 représente un atome d'hydrogène ou un groupe hydroxyle,
et
R3 représente un atome d'hydrogène, un groupe hydroxyle ou un groupe méthoxy,
et
R4 représente un atome d'hydrogène ou un groupe méthyle,
et dans laquelle un ou plusieurs des groupes hydroxyle peut ou bien peuvent être glycosylé(s), de préférence bêta-D-glycosidés,
est ou bien sont décomposés dans une composition contenant au moins 5 % en poids d'eau, de préférence au moins 10 % en poids d'eau, respectivement par rapport au poids total de la composition, à une valeur pH supérieure à 3, de préférence supérieure à 4, de manière particulièrement préférée supérieure à 5, et le ou bien les résidu(s) glycoside(s) éventuellement présent(s) est ou bien sont séparés simultanément ou ultérieurement par voie enzymatique ou par hydrolyse faiblement acide.

11. Procédé selon la revendication 10, dans lequel ladite isocoumarine ou bien le mélange de deux ou plusieurs isocoumarine(s) de formule (II) est ou bien sont utilisés sous forme d'extrait d'une plante, de préférence sous forme

d'extrait *Hydrangea dulcis.*

**12.** Utilisation d'un composé de formule (I) ou d'un mélange de deux ou plusieurs composés de formule (I) tels que définis dans la revendication 1, pour masquer ou réduire une impression de goût amer.

**13.** Composé de formule (I) tel que défini dans la revendication 1, dans lequel A représente une liaison simple et R1 représente un groupe hydroxyle, choisi parmi les composés (2) et (3),

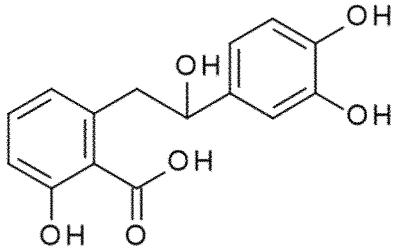

(2)

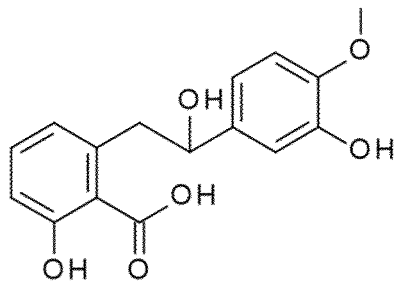

(3)

ou un sel physiologiquement acceptable de celui-ci.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1972203 A1
- US 3488419 A
- DE 2224430 A1
- DE 2343196 A1
- US 5286500 A
- WO 2002091849 A1
- WO 2001001926 A
- WO 2001001927 A
- WO 2001001928 A
- WO 2001001929 A
- EP 1064088 B1
- WO 2004043906 A
- EP 2298084 A1
- EP 2386211 B1
- EP 2954785 A
- EP 2868209 A1


### In der Beschreibung aufgeführte Nicht-Patentliteratur


- **MEYERHOF.** Reviews of Physiology. *Biochemistry and Pharmacology,* 2005, vol. 154, 37-72
- *Chemosensory Perception,* 2008, vol. 1 (1), 58-77
- *Recent Patents on Drug Delivery and Formulation,* 2009, vol. 3, 26-39